# EUROPÄISCHE PATENTSCHRIFT

(11) **EP 1 109 981 B1**
(45) Veröffentlichungstag und Bekanntmachung des Hinweises auf die Patenterteilung: **30.07.2003**
(21) Anmeldenummer: 99944439.1
(22) Anmeldetag: 19.08.1999
(51) Int. Cl.: E05B 49/00

(54) **VERFAHREN ZUM DURCHFÜHREN EINER SCHLÜSSELLOSEN ZUGANGSBERECHTIGUNGSKONTROLLE SOWIE SCHLÜSSELLOSE ZUGANGSBERECHTIGUNGSKONTROLLEINRICHTUNG**
METHOD FOR CARRYING OUT A KEYLESS ACCESS AUTHORISATION CHECK AND KEYLESS ACCESS AUTHORISATION CHECK DEVICE
PROCEDE POUR EFFECTUER UN CONTROLE D'AUTORISATION D'ACCES SANS CLE, ET UNITE DE CONTROLE D'AUTORISATION D'ACCES SANS CLE

(30) Priorität: 01.09.1998 DE 19839696; 01.09.1998 DE 19839695; 10.06.1999 DE 19926234
(43) Veröffentlichungstag der Anmeldung: 27.06.2001
(73) Patentinhaber: Leopold Kostal GmbH & Co. KG, 58507 Lüdenscheid (DE)
(72) Erfinder: KRAMER, Detlev, D-58239 Schwerte (DE); PRETZLAFF, Volker, D-58638 Iserlohn (DE); VENS, Rainer, D-44139 Dortmund (DE); VOGELS, Paul, D-44227 Dortmund (DE); FROMM, Michael, D-44289 Dortmund (DE); WOLF, Dirk, D-44263 Dortmund (DE); RAAB, Peter, D-58099 Hagen (DE)
(74) Vertreter: Haverkamp, Jens
(86) Internationale Anmeldenummer: EP9906072
(87) Internationale Veröffentlichungsnummer: WO00012848

(56) Entgegenhaltungen:
- WO-A-91/10919
- DE-A- 4 440 855
- DE-A- 19 632 025
- US-A- 4 454 512
- US-A- 5 293 160
- US-A- 5 432 516
- US-A- 5 723 911

## Beschreibung

Die Erfindung bezieht sich auf das Gebiet des Durchführens einer schlüssellosen Zugangsberechtigungskontrolle zum Überprüfen, ob beispielsweise eine Person berechtigt ist, eine bestimmte Handlung durchzuführen, wie etwa ein Kraftfahrzeug zu öffnen. Insbesondere betrifft die Erfindung ein Verfahren zum Durchführen einer schlüssellosen Zugangsberechtigungskontrolle mit einer drahtlosen Kommunikation zwischen einer einer Basisstation zugeordneten Sende-Empfangseinheit und einem mobilen Identifikationsgeber (ID-Geber) zum Überprüfen der Zugangsberechtigung einer den ID-Geber mitführenden Person, umfassend:
- Senden eines Codesignals durch die Sende-Empfangseinheit der Basisstation,
- Empfangen dieses Codesignals durch den ID-Geber,
- Durchführen einer von der Sende-Empfangseinheit detektierbaren und von dem ID-Geber ausgeführten Aktion als Antwortsignal des ID-Geber auf den Empfang des Codesignals und
- Detektieren der Aktion des ID-Gebers und Bestimmen des Abstandes zwischen der Basisstation und dem ID-Geber.

Ferner betrifft die Erfindung eine schlüssellose Zugangsberechtigungskontrolleinrichtung mit einer eine Sende-Empfangseinheiten sowie ein Steuer- und Auswerteglied aufweisenden Basisstation und einem mobilen, eine Sende-Empfangseinheit aufweisenden Identifikationsgeber (ID-Geber) zum Überprüfen der Zugangsberechtigung einer den ID-Geber mitführenden Person, mit welcher Basisstation eine Abstandsermittlung zum Bestimmen des Abstandes von der Basisstation zum ID-Geber durchführbar ist.

Schlüssellose Schließsysteme werden bei zahlreichen Anwendungen, beispielsweise in Kraftfahrzeugen zur Erhöhung des Bedienkomforts eingesetzt. Herkömmlich werden als Fembedienungssysteme Infrarotsysteme oder Funksysteme verwendet, bei denen der berechtigte Benutzer aktiv den ID-Geber betätigt, um ein Signal an die Basisstation, beispielsweise an eine im Kraftfahrzeug vorgesehene Empfangseinheit zum Öffnen des Fahrzeuges zu übermitteln. Zur weiteren Erhöhung des Bedienkomforts ist man bei Kraftfahrzeugen inzwischen dazu übergegangen, passive Zugangsberechtigungskontrollsysteme einzusetzen, so daß der berechtigte, einen gültigen ID-Geber mitführende Benutzer sein Kraftfahrzeug öffnen kann, ohne aktiv den ID-Geber betätigen zu müssen. Eine derartige schlüssellose Zugangsberechtigungskontrolleinrichtung ist beispielsweise in der DE 43 29 697 C2 beschrieben. Bei dem in diesem Dokument offenbarten Verfahren wird von einer im Kraftfahrzeug angeordneten Sende-Empfangseinheit ein Codesignal gesendet, welches von dem ID-Geber empfangen wird, wenn sich dieser im Empfangsbereich dieses Signals befindet. Daraufhin wird von dem ID-Geber als durch den Empfang des Codesignals ausgelöste Aktion ein Antwortsignal zurückgesendet, welches nach Empfang durch die kraftfahrzeugseitige Empfangseinheit auf seine Gültigkeit hin überprüft wird. Bei Empfang eines gültigen Antwortsignals wird kraftfahrzeugseitig die gewünschte Aktion ausgelöst, nämlich das Entriegeln der Kraftfahrzeugtüren. Problematisch ist bei diesem passiven System, daß die Funkstrecke zwischen der Basisstation und dem ID-Geber mit einfachen Mitteln unbefugt und für den berechtigten Benutzer unbemerkbar verlängert werden kann. Auf diese Weise kann ein Unbefugter eine Funkverbindung zwischen der kraftfahrzeugseitigen Sende-Empfangseinheit und dem zum Öffnen berechtigten ID-Geber herstellen, auch wenn letzterer sich nicht im vorgesehenen Empfangsbereich des Fragesignals befindet, und sich somit unbemerkt Zutritt zu dem Kraftfahrzeug verschaffen.

Diesem Problem begegnet der Gegenstand der DE 196 32 025 A1 dadurch, daß gemäß der in diesem Dokument beschriebenen schlüssellosen Zugangsberechtigungskontrolleinrichtung eine Laufzeiterfassung bezüglich des gesendeten Frage- und des empfangenen Antwortsignals durchgeführt wird, bei der diejenige Zeitspanne ermittelt wird, die das gesendete Codesignal benötigt, um nach seinem Aussenden von einer Basisstation wiederum von dieser als Antwortsignal empfangen zu werden. Ist die Übertragungsstrecke verlängert, dann ist das Zeitintervall von dem Senden des Codesignals bis zum Empfang des Antwortsignals naturgemäß größer als dasjenige, wenn sich der ID-Geber bestimmungsgemäß in unmittelbarer Kraftfahrzeugnähe befindet und die zurückgelegte Funkstrecke entsprechend kurz ist. Überschreitet die erfaßte Signallaufzeit einen vorbestimmten Wert, erfolgt zum Verhindern eines unberechtigten Zutrittes eine Sperrung des Zugangsberechtigungskontrollverfahrens.

Zum Durchführen des in diesem Dokument beschriebenen Zugangsberechtigungskontrollverfahrens ist es notwendig, mit hoher Genauigkeit die Signallaufzeit zu erfassen. Die Kommunikation zwischen der Sende-Empfangseinheit und dem mobilen ID-Geber ist üblicherweise auf einen eng begrenzten Bereich um die Basisstation, bei Kraftfahrzeugen beispielsweise auf einen Bereich zwischen 5 und 10 Metern ausgelegt. Die Laufzeit eines ordnungsgemäß gesendeten und empfangenen Signals beträgt bei diesem Abstand zwischen 16,5 nsec und 33 nsec. Eine Erfassung derart kurzer Zeitspannen insbesondere in der gewünschten Auflösung läßt sich nur mit einem nicht unbeträchtlichen Aufwand ermöglichen - einem Aufwand, der in zahlreichen Anwendungsfällen, beispielsweise bei einem Kraftfahrzeug, nicht vertretbar ist.

Ausgehend von dem zuletzt diskutierten Stand der Technik liegt der Erfindung zum einen die Aufgabe zugrunde, ein gattungsgemäßes Verfahren zum Durchführen einer schlüssellosen Zugangsberechtigungskontrolle vorzuschlagen, das nicht nur eine ausreichende Sicherheit im Hinblick auf die Möglichkeit einer Erkennung einer manipulierten Streckenverlängerung aufweist, sondern das ebenfalls mit einem Einsatz einfacher Mittel realisierbar ist.

Ferner liegt der Erfindung die Aufgabe zugrunde, eine gattungsgemäße schlüssellose Zugangsberechtigungskontrolleinrichtung vorzuschlagen, mit der unter Einsatz vertretbarer Mittel eine (manipulierte) Streckenverlängerung erkennbar ist.

Die verfahrensbezogene Aufgabe wird erfindungsgemäß dadurch gelöst, daß die Abstandsbestimmung auf Grundlage einer Relativbestimmung erfolgt, bei der die Unterschiede einer mit der Signallaufzeit korrelierenden und sich wegabhängig ändernden Signalcharakteristik zwischen einem basisstationseitig überwachten Referenzcodesignal und dem von der Sende-Empfangseinheit empfangenen Antwortsignal ausgewertet werden.

Die vorrichtungsbezogene Aufgabe wird erfindungsgemäß durch die kennzeichnenden Merkmale des Anspruches 23 gelöst.

Der beanspruchten Erfindung liegt die Erkenntnis zugrunde, daß mit hinreichender Auflösung eine Abstandsbestimmung auf indirektem Wege durch Erfassen einer mit der Laufzeit eines Signales korrelierenden Signalgröße unter Einsatz einfacher Mittel möglich ist. Diese Abstandsbestimmung erfolgt im Gegensatz zu dem vorbekannten Verfahren durch eine Relativbestimmung, bei der basisstationseitig ein Referenzcodesignal im Hinblick auf die vorgesehene gesendete Signalcharakteristik überwacht wird und die Signalcharakteristik dieses Referenzcodesignales mit der Signalcharakteristik des von dem ID-Geber zurückgesendeten und von der Sende-Empfangseinheit empfangene Antwortsignales verglichen wird. Die sich verglichen mit dem Referenzcodesignal wegabhängig ändernde Signalcharakteristik gibt dann im Vergleich mit derjenigen des Referenzcodesignales Aufschluß über die zurückgelegte Strecke des Codesignales und des Antwortsignales. Dabei kann vorgesehen sein, daß das Referenzcodesignal beispielsweise das gesendete Codesignal ist, welches über die Sendedauer des Codesignales hinaus durch die Basisstation überwacht wird. Die von dem ID-Geber ausgelöste Aktion, deren Detektion durch die Basisstation den Meßzeitraum begrenzt, kann beispielsweise das Zurücksenden des von dem ID-Geber empfangenen Codesignales sein. Die von dem ID-Geber ausgelöste Aktion kann auch eine andere von der Basisstation detektierbare Aktion sein, wie beispielsweise das Ausschalten eines Senders und somit die Detektion durch die Basisstation des Zeitpunktes, wann ein solcher Sender durch den ID-Geber ausgeschaltet worden ist. Der Hardwareeinsatz zum Durchführen einer solchen relativen Abstandsbestimmung ist verglichen mit dem zum Durchführen einer absoluten Laufzeitmessung sehr gering. In Abhängigkeit von dem eingesetzten Verfahren können zahlreiche Auswerteschritte auch über eine Datenverarbeitung gelöst werden.

Im Rahmen dieser Ausführungen und der Beschreibung der Erfindung wird davon ausgegangen, daß entweder die Verzögerungszeiten durch die eingesetzten Schaltungsteile sehr gering gegenüber der eigentlichen Signallaufzeit oder aber bekannt sind, oder ermittelt und bei der Auswertung berücksichtigt werden.

Zum Durchführen einer solchen relativen Abstandsbestimmung können unterschiedliche Signalcharakteristika herangezogen werden. Vorgesehen sein kann beispielsweise eine basisstationseitige Schwingungszählung der Trägerwelle des gesendeten Codesignales über einen Zeitraum, bis beispielsweise ein Antwortsignal von der Sende-Empfangseinheit empfangen worden ist. Die an der Basisstation durchgeführte Schwingungszählung über die Zeitdauer bis zur Detektion der ausgeübten Aktion beispielsweise das Rücksenden des empfangenen Codesignales multipliziert mit der Periodenzeit der Trägerwelle ergibt die Laufzeit des Signals von der Basisstation zum ID-Geber und zurück. Der Abstand zwischen der Basisstation und dem ID-Geber errechnet sich dann aus der halben Signallaufzeit multipliziert mit der Lichtgeschwindigkeit. Daraus ergibt sich, daß die Laufzeit nicht stufenlos, sondern in Vielfachen der Periodenzeit ermittelt werden kann. Bei Einsatz einer Trägerfrequenz von beispielsweise 100 MHz würde die resultierende Abstandsbestimmung zwischen der Basisstation und dem ID-Geber ein Auflösungsvermögen von etwa 1,5 m aufweisen. Bei Einsatz einer Trägerwelle in einem ISM-Band, etwa mit einer Frequenz von 434 MHz, ist durch die entsprechend geringere Periodenzeit ein Auflösungsvermögen von etwa 0,35 m erreichbar.

Zur Verwirklichung des erfindungsgemäßen Verfahrens gemäß dieser Ausgestaltung können die ohnehin zum Durchführen einer Berechtigungsabfrage eingesetzten elektronischen Bauelemente eingesetzt werden. Zusätzlich erforderlich ist lediglich der Einsatz eines Zählgliedes, welches beispielsweise aus Logikgattern oder Flip-Flops aufgebaut sein kann. Eine Realisierung des erfindungsgemäßen Verfahrens ist somit ohne großen zusätzlichen Aufwand möglich.

Zweckmäßigerweise erfolgt die drahtlose Kommunikation in einem Frequenzbereich, der einem ISM-Band angehörig ist. Das Auflösungsvermögen der Abstandsbestimmung unter Einsatz einer solchen Frequenz ist erheblich höher als das bei Einsatz eines solchen Verfahrens zur schlüssellosen Zugangsberechtigungskontrolle bei einem Kraftfahrzeug benötigte. Das Auflösungsvermögen bei Einsatz eines solchen Verfahrens bei Kraftfahrzeugen liegt in der Größenordnung von 5 bis 10 Metern. Durch das geringere benötigte Auflösungsvermögen bei einem solchen Einsatz, verglichen mit dem möglichen Auflösungsvermögen, können die Anforderungen an das Zählglied dadurch verringert werden, daß nicht jede Schwingung, sondern nur jede x-te, etwa jede 2^{x}-te Schwingung gezählt wird. Eine solche selektive Schwingungszählung läßt sich beispielsweise durch Einsatz eines Frequenzteilers oder eines Frequenzmischers realisieren, so daß bei einem Teilungsverhältnis von 1 : 16 nur jede 16. Schwingung gezählt wird. Bei Einsatz einer Frequenz von 434 MHz und einem Teilungsverhältnis von 1 : 16 ergibt sich eine Zählfrequenz von 27,125 MHz und demzufolge ein Auflösungsvermögen von etwa 5,5 Metern - ein Auflösungsvermögen hinsichtlich der Abstandsbestimmung, das für einen Einsatz des Verfahrens bei Kraftfahrzeugen als ausreichend angesehen werden kann.

In einer Weiterbildung dieses Ausführungsbeispiels ist vorgesehen, daß in einem ersten Schritt zur Abstandsbestimmung durch die Sende-Empfangseinheit der Basisstation ein Befehl SENDER ID-GEBER EIN gesendet wird. Aufgrund dieses Befehles schaltet sich im ID-Geber ein Sender ein, um auf einer ersten Frequenz zu senden. Nach einer vorbestimmten Zeitspanne, die ausreichend lang bemessen ist, daß der ID-geberseitige Sender eingeschwungen ist, wird durch die Sende-Empfangseinheit der Basisstation auf einer zweiten Frequenz ein Codesignal gesendet. Dieses Codesignal ist der Befehl SENDER ID-GEBER AUS. Gleichzeitig mit der Befehlsaussendung wird die Schwingungszählung der Trägerwelle dieses Sendesignals gestartet. Zuvor ist auch der Empfangskanal der Sende-Empfangseinheit auf der ersten Frequenz freigeschaltet, so daß das von dem ID-Geber gesendete Signal empfangbar ist. Gestoppt wird die Schwingungszählung, wenn durch die Sende-Empfangseinheit der Basisstation kein Sendesignal des ID-Gebers mehr detektierbar ist. Die Schwingungszählung ist somit für eine Zeitspanne erfolgt, die die Laufzeit des Codesignals von der Basisstation zum ID-Geber und zurück benötigt hat. Das von der Basisstation detektierte Aktionssignal des ID-Gebers ist die Reaktion des ID-Gebers auf das Codesignal hin.

In noch einer weiteren Ausgestaltung dieses Ausführungsbeispiels ist vorgesehen, daß das von der Basisstation gesendete Codesignal von dem ID-Geber quasi gespiegelt zurückgesendet wird. Die Schwingungszählung wird bei diesem Ausführungsbeispiel dann gestoppt, wenn das Codesignal als Antwortsignal des ID-Gebers wieder vollständig von der Sende-Empfangseinheit der Basisstation empfangen worden ist. Um möglicherweise bei der Datenübertragung eintretende Datenverluste ausgleichen zu können, ist in einem weiteren Ausführungsbeispiel vorgesehen, daß der Basisstation zwei Schwingungszählglieder zugeordnet sind, wobei eine erste Schwingungszählung an das Senden des Codesignals und eine weitere Schwingungszählung an den Empfang des von dem ID-Geber gespiegelten Codesignals gekoppelt ist. Die Schwingungszählung des zweiten, an den Empfang des Codesignals gekoppelten Zählgliedes wird gestoppt, wenn das dem Senden des Codesignals zugeordnete Zählglied einen Zählerstand erreicht hat, der der doppelten Anzahl der dem Codesignal entsprechenden Schwingungen entspricht. Je größer der Abstand zwischen der Basisstation und dem ID-Geber und entsprechend länger die Signallaufzeit ist, je größer ist die Differenz des ermittelten Zählerstandes des dem Empfang des Codesignals zugeordneten Zählergliedes zu der dem Codesignal entsprechenden Schwingungsanzahl. Es ist zweckmäßig, bei den beiden zuletzt beschriebenen Beispielen als Codesignal eine vorbestimmte Anzahl an Schwingungen einer Trägerwelle zu senden.

In einem weiteren Ausführungsbeispiel der Erfindung wird ausgenutzt, daß sich die Phasenlage einer über eine Funkstrecke übertragenen Welle in Abhängigkeit von der zurückgelegten Funkstrecke gegenüber der ursprünglich gesendeten Phasenlage verschiebt. Dabei kann sowohl die Phasenlage der Frequenz als auch diejenige einer Amplitudenänderung (Hüllkurve) jeweils für sich alleine oder auch gemeinsam verwendet werden, um die Phasenlage des gesendeten Fragesignals mit derjenigen des von dem ID-Geber zurückgesendeten Antwortsignals zu vergleichen. Dabei ist vorgesehen, daß das Senden des Antwortsignals vom ID-Geber zur Sende-Empfangseinheit der Basisstation unter Verwendung einer Trägerwelle erfolgt. Die Trägerwelle kann eine in dem Fragesignal enthaltene Welle, beispielsweise das Fragesignal selbst sein, oder durch die zum Modulieren einer zum Übermitteln des Fragesignals vorgesehenen Trägerwelle an den ID-Geber übermittelt werden. Befindet sich der ID-Geber innerhalb des vorbestimmten Empfangsbereiches des gesendeten Fragesignals, bei einem Einsatz des Verfahrens im Automotivebereich kleiner 3 m, ist die zurückgelegte Funkstrecke (Sende-Empfangseinheit - ID-Geber - Sende-Empfangseinheit) kurz. Eine Phasenverschiebung zwischen dem demodulierten Antwortsignal und dem ursprünglich gesendeten Fragesignal ist so gering, daß innerhalb eines vorbestimmten Toleranzbereiches von phasenstarren Signalen (Fragesignal und Antwortsignal) ausgegangen werden kann. Bei einer manipulierten Streckenverlängerung wird sich die Phasenlage zwischen Fragesignal und Antwortsignal ständig verschieben, so daß sich diese außerhalb des Toleranzbereiches des als phasenstarr definierten Betriebes befindet. Die Wahrscheinlichkeit, daß das empfangene und demodulierte Antwortsignal eine Phase aufweist, die derjenigen des Fragesignals entspricht, ist dem Zufall überlassen und daher nur äußerst gering. Folglich wird die gewünschte Aktion, etwa das Öffnen eines Kraftfahrzeuges nur ausgeführt, wenn sich der ID-Geber in der vorbestimmten Entfernung zur Basisstation befindet.

Zur Vermeidung von unerwünschten Rückkopplungen wird zweckmäßigerweise das Fragesignal in einer anderen Frequenz gesendet als das Antwortsignal. In einer besonders einfachen Ausgestaltung wird das Fragesignal auf derjenigen Frequenz gesendet, die zum Modulieren des Antwortsignals vorgesehen ist. Dies kann beispielsweise dadurch realisiert sein, daß das Fragesignal auf einer Niederfrequenzstrecke gesendet und dieses von dem ID-Geber empfangene Fragesignal direkt zum Modulieren einer Trägerwelle auf einer Hochfrequenzstrecke verwendet wird. Beispielsweise kann ein Fragesignal ein auf einer NF-Strecke gesendetes Wecksignal zum Umschalten des ID-Gebers aus einem Ruhe- oder Schlafmodus in seinen Betriebsmodus sein.

Zur weiteren Erhöhung der Zugangssicherheit ist vorgesehen, den zum Senden des Fragesignals verwendeten Oszillator freischwingend zu betreiben, so daß dieser in seiner Frequenz gewissen Schwankungen unterworfen ist. Ebenfalls kann vorgesehen sein, die Sendefrequenz gemäß einem vorbestimmten Variationsmuster zu ändern, so daß die Zufälligkeit zur Realisierung einer unbefugten und dennoch phasenstarren Streckenverlängerung noch weiter verringert ist.

In einer weiteren Ausgestaltung dieses Ausführungsbeispiels ist vorgesehen, daß als Fragesignal von der Sende-Empfangseinheit eine mit einem Modulationsgemisch aus einer oder mehreren Modulationsvariablen modulierte Trägerwelle gesendet wird. Dabei kann vorgesehen sein, entweder ein Modulationsgemisch aus unterschiedlichen Frequenzen oder aus unterschiedlichen Amplituden oder auch aus einer Mischung dieser beiden Größen zu verwenden. Nach Empfang des auf diese Weise modulierten Antwortsignals erfolgt nach einer Demodulierung des Antwortsignals eine Filterung hinsichtlich der ursprünglichen Modulationsgemischanteile, beispielsweise der einzelnen Frequenzanteile. Der anschließende Schritt des Phasenvergleichens des ursprünglich gesendeten Fragesignals mit dem empfangenen Antwortsignal wird dann anhand der einzelnen, das Modulationsgemisch bildenden Anteilen, beispielsweise den Frequenzanteilen durchgeführt. Die Verwendung beispielsweise eines Modulationsgemisches aus unterschiedlichen Frequenzen zum Modulieren des Fragesignals erhöht die Betriebssicherheit des beanspruchten Verfahrens insbesondere dahingehend, daß eine zufällige Phasengleichheit bei einer unbefugten Streckenverlängerung durch die Möglichkeit einer absoluten Entfernungsmessung der zurückgelegten Funkstrecke erkennbar ist. Zweckmäßigerweise wird bei Verwendung eines Frequenzgemisches eine Grundfrequenz verwendet und diese mit einer bestimmten Anzahl weiterer Frequenzen, die jeweils durch zwei geteilte Anteile der Grundfrequenz sind, gemischt. Dies läßt sich auf einfache Weise mit einem Frequenzteiler verwirklichen. Dabei bestimmt die Größe der Grundfrequenz die Auflösung der Entfernungsmessung und die Anzahl der Teilungen die maximal erkennbare Entfernung.

Ein Phasenvergleich zwischen dem ursprünglich gesendeten Fragesignal und dem empfangenen Antwortsignal läßt sich beispielsweise durch Verwendung eines Phasenkomparators realisieren.

In noch einem weiteren Ausführungsbeispiel der Erfindung wird eingesetzt, daß eine über eine Funkstrecke gesendete modulierte Trägerwelle in Abhängigkeit von der Länge der von dieser zurückgelegten Funkstrecke im Hinblick auf eine Änderung bzw. einen Versatz der Funktionswerte der verwendeten Modulationsvariablen verglichen mit zeitgleichen Funktionswerten des ursprünglich gesendeten Signals ausgewertet werden kann. Ausgenutzt wird dabei die durch die Entfernung zwischen Basisstation und ID-Geber bedingte zeitliche Verschiebung der Modulationskurve des Antwortsignals gegenüber der identischen Modulationskurve des Fragesignals. Gemäß dem beanspruchten Verfahren ist vorgesehen, einen Funktionswert der Modulationsvariablen des empfangenen Anwortsignals in einem bestimmten Zeitpunkt mit dem zeitgleichen Funktionswert der Modulationsvariablen des ursprünglich gesendeten Fragesignals zu vergleichen. Zweckmäßigerweise wird ein solches Vergleichen durch den Schritt einer Differenzbildung der Beträge oder auch der Quadrate der Funktionswerte der Modulationsvariablen zu einem vorbestimmten Zeitpunkt durchgeführt. Dieser Funktionswertvergleich kann an quasi beliebiger Stelle der Modulationsfunktion und somit kontinuierlich durchgeführt werden.

Zur Erhöhung der Zugangssicherheit kann vorgesehen sein, daß sich die Frequenz der für das Fragesignal vorgesehenen Trägerwelle von derjenigen des Antwortsignals unterscheidet. Zweckmäßig ist es, das Frageund/oder Antwortsignal auf derjenigen Strecke zu senden, auf der ohnehin ein ggf. kryptologischer Datendialog zwischen der Basisstation und dem ID-Geber stattfindet.

In einer Ausgestaltung dieses Verfahrens wird die Trägerwelle frequenzmoduliert, zur erleichterten Auswertung vorzugsweise linear frequenzmoduliert gesendet. Entsprechend sind der Basisstation Mittel zum Senden einer solchen Trägerwelle als Fragesignal sowie ein FM-Demodulator zugeordnet, in dem eine Demodulation des empfangenen Antwortsignals erfolgt. Der mobile ID-Geber weist einen FM-Demodulator zum Demodulieren des empfangenen Fragesignals auf. Zweckmäßigerweise ist der Ausgang des Demodulators an einen Eingang des für die Datenkommunikation vorgesehenen Transceivers angeschlossen, so daß das von dem ID-Geber gesendete Datensignal gleichzeitig durch seine Modulation das Antwortsignal zu dem gesendeten Fragesignal darstellt bzw. enthält.

Durch den Vergleich eines Funktionswertes der Modulationsvariablen, beispielsweise der Modulationsfrequenz des empfangenen Antwortsignals mit dem zeitgleichen Funktionswert der Modulationsfrequenz ergibt sich eine Differenzfrequenz. Das Maß dieser Differenzfrequenz ist ein Maß dafür, wie lang die zurückgelegte Funkstrecke (Basisstation - ID-Geber - Basisstation) ist. Zweckmäßigerweise erfolgt eine Berechtigungsüberprüfung dergestalt, daß ein Schwellwert für die Differenzfrequenz vorgegeben ist, wobei bei einem Überschreiten dieses Schwellwertes eine Benutzungsberechtigung verneint wird.

Alternativ zu einer Verwendung einer frequenzmodulierten Trägerwelle kann ebenfalls eine amplitudenmodulierten Trägerwelle oder auch eine frequenz- und amplitudenmodulierte Trägerwelle zur Charakterisierung des Frage- und Antwortsignals verwendet werden.

Weitere Vorteile der Erfindung sind Bestandteil der übrigen Unteransprüche sowie der nachfolgenden Beschreibung von Ausführungsbeispielen unter Bezugnahme auf die beigefügten Figuren. Es zeigen:
- **Fig. 1**: ein schematisiertes Blockschaltbild einer schlüssellosen Zugangsberechtigungskontrolleinrichtung mit einer Basisstation und einem ID-Geber,
- **Fig. 2**: ein zeitliches Ablaufdiagramm zur Bestimmung des Abstandes zwischen der Basisstation und dem ID-Geber der Figur 1,
- **Fig. 3**: ein schematisiertes Blockschaltbild einer weiteren schlüssellosen Zugangsberechtigungskontrolleinrichtung, umfassend eine Basisstation und einen ID-Geber,
- **Fig. 4**: ein schematisiertes Blockschaltbild noch einer weiteren schlüssellosen Zugangsberechtigungskontrolleinrichtung, umfassend eine Basisstation und einen ID-Geber,
- **Fig. 5**: ein zeitliches Ablaufdiagramm zur Abstandsbestimmung zwischen der Basisstation und dem ID-Geber entsprechend den Ausführungsbeispielen der Figuren 3 oder 4,
- **Fig. 6**: ein schematisiertes Blockschaltbild einer schlüssellosen Zugangsberechtigungskontrolleinrichtung,
- **Fig. 7**: ein prinzipielles Ablaufschema zum Überprüfen der Zugangsberechtigung einer einen ID-Geber mitführenden Person,
- **Fig. 8**: ein schematisiertes Blockschaltbild einer weiteren schlüssellosen Zugangsberechtigungskontrolleinrichtung,
- **Fig. 9a**: ein Diagramm mit einer Grundfrequenz und zwei weiteren Frequenzanteilen,
- **Fig. 9b**: ein Diagramm des sich aus dem Frequenzgemisch der Figur 9a ergebenden Amplitudenverlaufs,
- **Fig. 10**: ein Blockschaltbild einer Sende-Empfangseinrichtung einer Basisstation, etwa einem Kraftfahrzeug zugeordnet,
- **Fig. 11**: ein schematisiertes Blockschaltbild eines ID-Gebers und
- **Fig. 12**: ein Diagramm mit einer über die Zeit aufgetragenen linear frequenzmodulierten Trägerwelle als gesendetes Fragesignal und dem zeitlich dazu versetzt empfangenen Antwortsignal.

Eine schlüssellose Zugangsberechtigungskontrolleinrichtung 1 umfaßt eine Basisstation 2 und einen mobilen Identifikationsgeber (ID-Geber) 3. Zu der Basisstation 2 gehört eine Sende-Empfangseinheit 4 mit einem HF-Sender 5 und einem HF-Empfänger 6, die auf jeweils unterschiedlichen Frequenzen arbeiten. Der Basisstation ist ferner ein Mikrocontroller 7 zum Steuern des Sendebetriebs und zum Auswerten der empfangenen Signale angeschlossen. An den HF-Empfänger 6 ist ein Periodenzähler 8 zum Zählen der Schwingungen der empfangenen Trägerwelle angeschlossen. Der Periodenzähler 8 weist einen Start-Eingang 9 und einen Stop-Eingang 10 auf. Der Start-Eingang 9 ist mit dem Mikrocontroller 7 verbunden, über den das Startsignal zum Starten der Schwingungszählung an den Periodenzähler 8 übermittelt wird. Der Stop-Eingang 10 ist über ein UND-Glied 11 sowohl an den HF-Empfänger 6 als auch an den Mikrocontroller 7 angeschlossen. Der Stop-Eingang 10 des Periodenzählers 8 ist dann mit einem Stopsignal zum Stoppen der Schwingungszählung beaufschlagt, wenn durch den HF-Empfänger 6 nach einem Signalempfang kein Signal mehr empfangen wird.

Der ID-Geber 3 umfaßt ebenfalls eine Sende-Empfangseinheit 12 mit einem HF-Sender 13 und einem HF-Empfänger 14. Der HF-Sender 13 arbeitet auf derselben Frequenz wie der HF-Empfänger 6 der Basisstation 2; der HF-Empfänger 14 des ID-Gebers 3 arbeitet auf derselben Frequenz wie der HF-Sender 5 der Basisstation 2. Die verwendete HF-Strecke zwischen der Basisstation 2 und dem ID-Geber 3 ist somit duplexfähig. Der HF-Empfänger 14 ist zur Auswertung eingehender Signale an einen Mikrocontroller 15 angeschlossen. Der Mikrocontroller 15 ist über eine Datenleitung 16 und über eine Tastleitung 17 an den HF-Sender 13 angeschlossen. Parallel zu dem Mikrocontroller 15 ist in dem ID-Geber 3 eine Auswertelogik 18 zwischen dem HF-Empfänger 14 und dem HF-Sender 13 angeordnet. Die Auswertelogik 18 dient zum Erkennen eines von der Basisstation 2 gesendeten Codesignals sowie zum direkten Ansteuern des HF-Senders 13; ohne daß ein solches Signal durch den Mikrocontroller 15 ausgewertet werden und der HF-Sender 13 angesteuert werden müßte. Da mit der Auswertelogik 18 nur ein ganz bestimmtes Codesignal erkannt werden muß, ist die zum Auswerten benötigte Zeit konstant im Gegensatz zu der durch den Mikrocontroller 15 benötigten Rechenzeit. Die Auswertelogik 18 ist über eine Steuerleitung mit dem Mikrocontroller 15 zum Ein- und Ausschalten der Auswertelogik 18 verbunden.

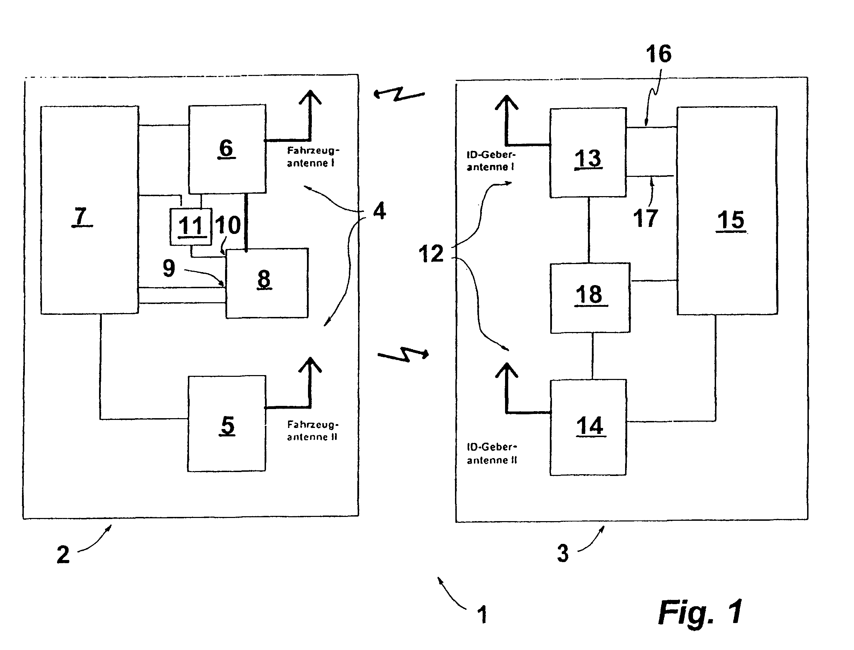

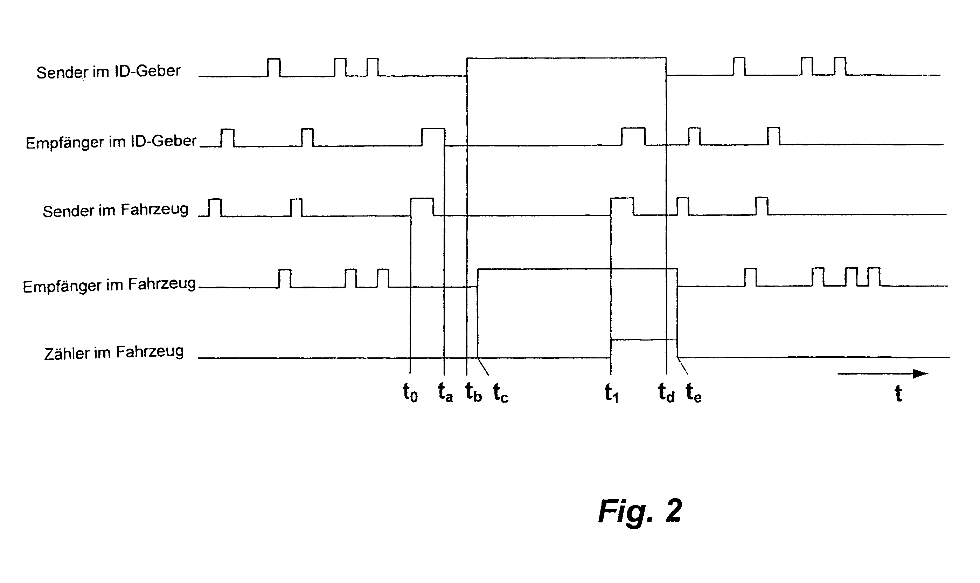

Die in Figur 1 dargestellte schlüssellose Zugangsberechtigungskontrolleinrichtung 1 dient sowohl zum Durchführen eines kryptologischen Frage-Antwort-Dialoges zum Feststellen einer Zugangsberechtigung als auch zum Bestimmen des aktuellen Abstandes des ID-Gebers 3 von der Basisstation 2. Die Abstandsbestimmung zwischen der Basisstation 2 und dem ID-Geber 3 erfolgt folgendermaßen, wobei diesbezüglich auf das Ablaufdiagramm der Figur 2 Bezug genommen ist: Innerhalb eines Kommunikationstelegramms im Rahmen der genannten kryptologischen Berechtigungsüberprüfung wird in einem vorbestimmten Zeitpunkt t₀ durch den HF-Sender 5 der Basisstation 2 der Befehl an den ID-Geber 3 gesendet: SENDER ID-GEBER EIN. Im Zeitpunkt tₐ hat der HF-Empfänger 14 des ID-Gebers 3 diesen Befehl empfangen. Im Zeitpunkt t_{b} startet der HF-Sender 13 mit dem Senden einer Trägerwelle auf der Frequenz f₁. Die auf der Frequenz f, gesendete Trägerwelle wird von dem HF-Empfänger 6 der Basisstation im Zeitpunkt t_{c} empfangen. Mit dem Empfang der Trägerwelle wird der Periodenzähler 8 auf Null gestellt. Im Zeitpunkt t₁ wird gleichzeitig ein Codesignal von dem HF-Sender 5, nämlich der Befehl: SENDER ID-GEBER AUS gesendet und über den Starteingang 9 der Periodenzähler 8 zum Zählen der auf der Frequenz f₁ empfangenen Schwingungen gestartet. Das Codesignal ist durch den HF-Sender 5 der Basisstation 2 auf der Frequenz f₂ gesendet worden. Nach Empfang des Codesignals durch den HF-Empfänger 14 des ID-Gebers 3 und nach Erkennen dieses Befehls durch die Auswertelogik 18 wird der HF-Sender 13 des ID-Gebers 3 ausgeschaltet, welcher Zeitpunkt in Figur 2 mit t_{d} gekennzeichnet ist. Der HF-Empfänger 6 der Basisstation 2 empfängt seit dem Zeitpunkt t_{c} die von dem HF-Sender 13 des ID-Gebers 3 gesendete Trägerwelle. Nachdem der HF-Sender 13 ausgeschaltet worden ist, kann der HF-Empfänger 6 im Zeitpunkt tₑ keine Trägerwelle mehr empfangen. In diesem Zeitpunkt wird auch der Periodenzähler 8 zum Feststellen des Zählerstandes gestoppt. Der ermittelte Schwingungszählerstand ist nun ein Maß für die Laufzeit des Signals zwischen der Basisstation 2 und dem ID-Geber 3 und zurück, wobei bei der Ermittlung der Laufzeit und dem daraus zu bestimmenden Abstand die Totzeiten und auch die Signallänge berücksichtigt sind.

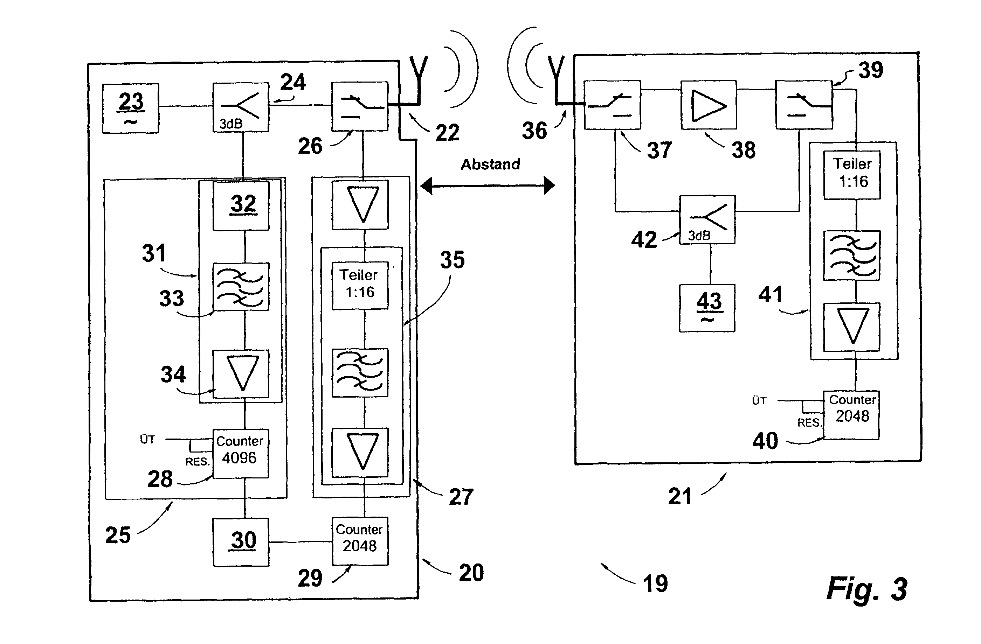

Figur 3 zeigt eine weitere schlüssellose Zugangsberechtigungskontrolleinrichtung 19 in einem Blockschaltbild mit einer Basisstation 20 und einem ID-Geber 21. In dieser Figur sind lediglich die Komponenten dargestellt, die zu einer Abstandsbestimmung zwischen der Basisstation 20 und dem ID-Geber 21 notwendig sind. Integriert sind zum Teil die dargestellten Module in die übliche Hardware zur Realisierung einer kryptologischen Zugangsberechtigungskontrolle. Die Basisstation 20 umfaßt als Sende-Empfangseinheit eine Antenne 22 zum Senden und Empfangen eines Signales, bei welchem Signal es sich um eine Trägerwelle handelt. Die Trägerwelle wird in einem Signalgenerator 23 generiert, welche anschließend einen Leistungsteiler 24 beaufschlagt. Der Leistungsteiler 24 führt das generierte Signal zum einen der Antenne 22 und zum anderen einem ersten Zählerschaltkreis 25 zu. Ein HF-Schalter 26 dient zum Umschalten des Betriebes der Basisstation 20 zwischen einem Senden, wie in Figur 3 dargestellt, und einem Empfangen. Beim Empfang des von dem ID-Geber 21 zurückgesendeten Codesignals steht der HF-Schalter 26 in seiner anderen Stellung, in der an den HF-Schalter 26 ein zweiter Zählerschaltkreis 27 angeschlossen ist. In beiden Zählerschaltkreisen 25 und 27 ist jeweils ein Zählglied 28 bzw. 29 vorgesehen, welche Zählglieder 28, 29 an einen Mikrocontroller 30 angeschlossen sind.

Das durch den Signalgenerator 23 generierte Signal ist eine Trägerwelle mit einer Frequenz innerhalb eines ISM-Bandes, nämlich 434 MHz. Zur Reduzierung der an das Zählglied 28 zu stellenden Anforderungen ist diesem ein Frequenzteilungsschaltkreis 31 vorgeschaltet, der aus dem eigentlichen Frequenzteiler 32 mit einem Teilungsverhältnis 1 : 16, einem nachgeschalteten Bandpaßfilter 33 und einem Verstärker 34 besteht. Ein entsprechend aufgebauter Frequenzteilungsschaltkreis 35 ist dem Zählerschaltkreis 27 zugeordnet.

Der ID-Geber 21 weist ebenfalls eine als Sende-Empfangseinheit vorgesehene Antenne 36 auf, der ein HF-Schalter 37 nachgeschaltet ist. Im Empfangsmodus, wie in Figur 3 dargestellt, ist an den HF-Schalter 37 ein Verstärker 38 und ein weiterer HF-Schalter 39 nachgeschaltet. Das empfangene Codesignal - die Trägerwelle - beaufschlagt ein Zählglied 40, dem ein Frequenzteilungsschaltkreis 41 entsprechend den Frequenzteilungsschaltkreisen 25 und 27 der Basisstation 20 vorgeschaltet ist. Parallel zu dem Verstärker 38 ist über einen Leistungsteiler 42 ein Signalgenerator 43 geschaltet, dessen Signale bei entsprechender Stellung der HF-Schalter 37, 39 über die Antenne 36 gesendet werden können.

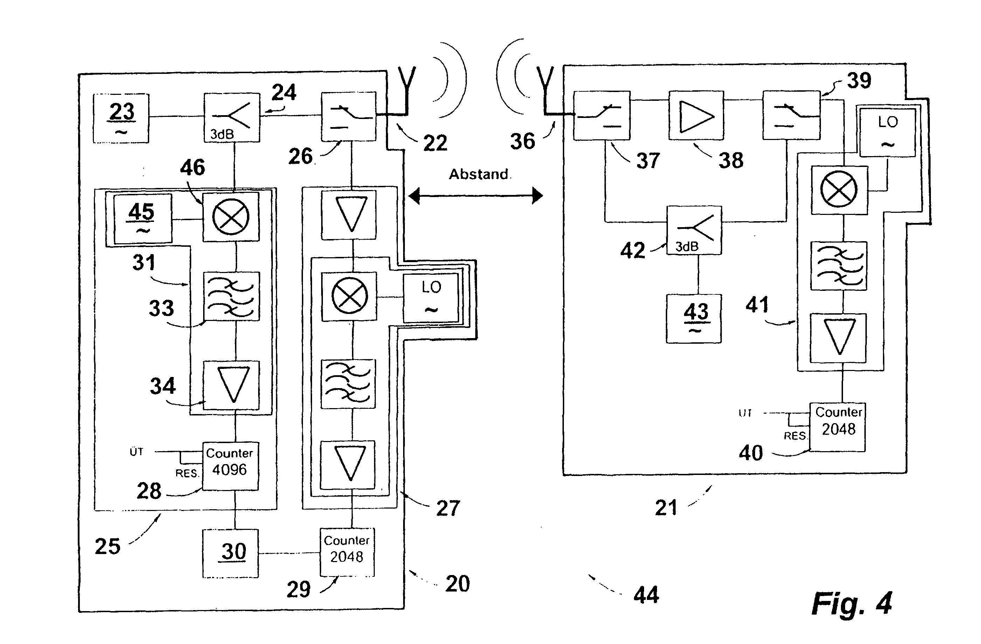

Figur 4 zeigt eine weitere schlüssellose Zugangsberechtigungskontrolleinrichtung 44, die grundsätzlich aufgebaut ist wie die zu Figur 3 beschriebene schlüssellose Zugangsberechtigungskontrolleinrichtung 19. Gleiche Elemente sind bei den beiden Zugangsberechtigungskontrolleinrichtungen 19 bzw. 44 mit gleichen Bezugszeichen gekennzeichnet. Im Unterschied zu der Zugangsberechtigungskontrolleinrichtung 19 ist bei der schlüssellosen Zugangsberechtigungskontrollrichtung 44 anstelle des eigentlichen Frequenzteilers 32 jeweils ein Frequenzmischer, bestehend aus einem Lokaloszillator 45 und einem Mischer 46 vorgesehen.

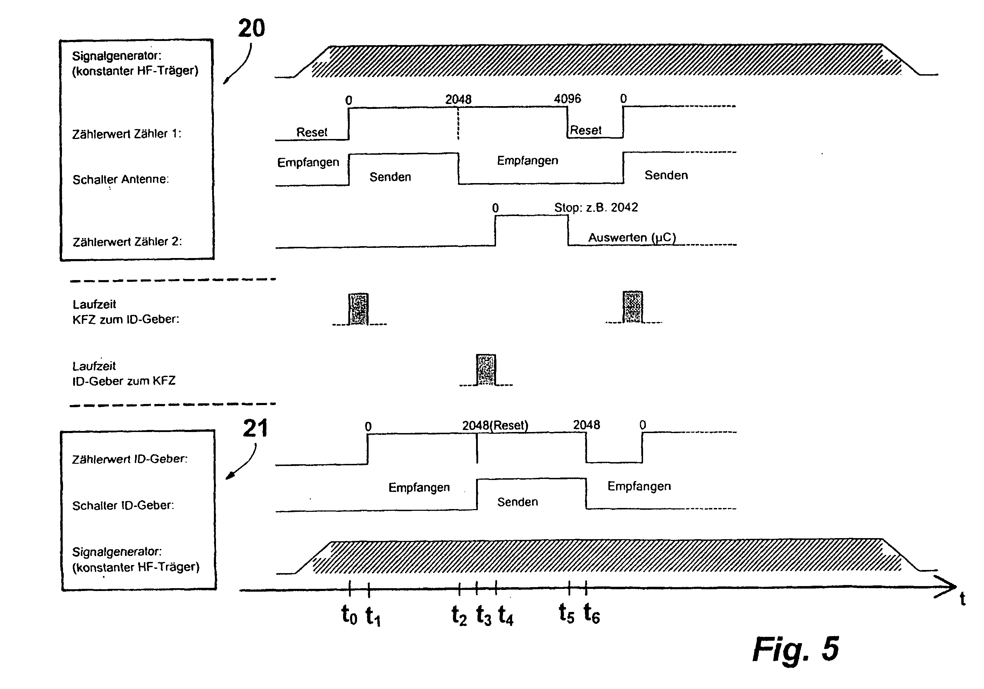

Im folgenden ist die Funktionsweise der schlüssellosen Zugangsberechtigungskontrolleinrichtung 19 hinsichtlich einer Bestimmung des Abstandes von der Basisstation 20 zu dem ID-Geber 21 beschrieben, wobei zusätzlich auf Figur 5 Bezug genommen ist. Entsprechendes gilt für die schlüssellose Zugangsberechtigungskontrolleinrichtung 44 der Figur 4. Über den Signalgenerator 23 wird ein konstanter HF-Träger generiert. Im Zeitpunkt t₀ wird der Zähler 28 auf 0 gesetzt und zum Zählen der Schwingungen auf den HF-Träger geschaltet, wobei gleichzeitig der HF-Schalter 26 auf Senden geschaltet wird. Im Zeitpunkt t₁, der um die Signallaufzeit zwischen der Basisstation 20 und dem ID-Geber 21 zu dem Zeitpunkt t₀ versetzt ist, wird die HF-Trägerwelle von dem ID-Geber 21 empfangen. Als Codesignal ist eine vorbestimmte Schwingungsanzahl, nämlich 2048 Schwingungen, vorgesehen. Im Zeitpunkt t₂ - also nach Senden des Codesignals - wird über den HF-Schalter 26 die Basisstation auf Empfang umgeschaltet, so daß ein weiteres Senden der HF-Trägerwelle unterbunden ist. Im Zeitpunkt t₃ entspricht der Zählerstand des Zählgliedes 40 des ID-Gebers 21 dem der gesendeten Schwingungsanzahl, nämlich 2048. In diesem Zeitpunkt schaltet der ID-Geber von seinem Empfang auf seinen Sendemodus, wobei die beiden HF-Schalter 37 und 39 in die jeweilig andere, in Figur 3 nicht dargestellte Position gebracht werden. Der Signalgenerator 43 des ID-Gebers 21 ist zuvor eingeschaltet worden, so daß ein konstanter HF-Träger zum Senden zur Verfügung steht. Die Frequenz des HF-Trägers, generiert durch den Signalgenerator 43, entspricht derjenigen des Signalgenerators 23 der Basisstation 20. Das Codesignal - nämlich 2048 Schwingungen des Trägers - wird nunmehr beginnend im Zeitpunkt t₃ von dem ID-Geber 21 zurückgesendet. Wiederum um die Signallaufzeit zeitversetzt wird der Beginn des Rücksendens des Codesignals von der Basisstation 20 im Zeitpunkt t₄ empfangen. Die im Empfangsmodus befindliche Basisstation 20 leitet das zurückgesendete Codesignal auf den Zählerschaltkreis 27, so daß im Zählglied 29 die zurückgesendete Schwingungsanzahl gezählt werden kann. Im Zeitpunkt t₅ hat das Zählglied 28 die doppelte Anzahl der dem Codesignal entsprechenden Schwingungen, nämlich 4096 gezählt. In diesem Zeitpunkt wird der Zählerstand des Zählgliedes 29 angehalten und durch den Mikrocontroller 30 ausgelesen, welcher Zählerstand sich beispielsweise erst bei 2042 befindet. Das zurückgesendete Codesignal ist noch nicht vollständig empfangen. Dieses "vorzeitige" Stoppen des Zählgliedes 29 dient zum Kompensieren möglicher nicht erkannter Schwingungen bei der Kommunikation zwischen dem ID-Geber 21 und der Basisstation 20.

Die Differenz zwischen der für das Codesignal vorgesehenen Schwingungsanzahl (hier: 2048) und der durch das Zählglied 29 festgestellten Schwingungsanzahl (hier: 2042) entspricht der Signallaufzeit von der Basisstation 20 zu dem ID-Geber 21 und zurück. Im Zeitpunkt t₆ wird der ID-Geber 21 wiederum in seinen Empfangsmodus geschaltet. Nunmehr besteht die Möglichkeit, die Abstandsbestimmung wiederholt vorzunehmen oder das Abfrageprotokoll weiter zu führen.

Um auch nicht erkannte Schwingungen beim Senden des Codesignales von der Basisstation 20 zu dem ID-Geber 21 und bei der anschließenden Signalverarbeitung zu kompensieren, kann vorgesehen sein, daß anstelle des Sendens der exakten Schwingungszahl eine geringfügig höhere Schwingungszahl gesendet wird. Besonders zweckmäßig ist eine Erweiterung des Verfahrens, bei der zwischen den unterschiedlichen Modi der Basisstation 20 bzw. des ID-Gebers 21 - Sende- bzw. Empfangsmodus - jeweils Verzögerungszeiten eingeschaltet sind. Ohne weiteres kann dann das gesendete Codesignal einen solchen Sicherheitsanhang aufweisen, ohne daß der ID-Geber 21 bereits das Codesignal zurücksendet, bevor die Basisstation 20 in ihren Empfangsmodus geschaltet ist. Die Verzögerungszeiten können in einfacher Weise dadurch bereitgestellt werden, daß die jeweils eingesetzten Zählglieder 28 bzw. 40 entsprechend geschaltet sind, daß eine solche Verzögerungszeit ebenfalls der Länge des gesendeten Codesignales, in dem beschriebenen Ausführungsbeispiel 2048 Schwingungen lang bemessen ist. Bei der späteren Auswertung werden derartig eingebaute Verzögerungszeiten berücksichtigt.

Durch die in den Ausführungsbeispielen dargestellte doppelte Laufzeit ist das Auflösungsvermögen bezüglich des Abstandes zwischen der Basisstation und dem ID-Geber in einer Genauigkeit ermittelbar, die höher ist als eine Abstandsbestimmung lediglich durch Erfassen der einfachen Signallaufzeit. Diese Genauigkeit kann ferner dadurch erhöht werden, indem die Abstandsbestimmung nicht nur einmal, sondern mehrfach wiederholt, auch an unterschiedlichen Stellen innerhalb eines Übertragungsprotokolls, vorgenommen wird. Eine Ermittlung des tatsächlichen Abstandes erfolgt dann beispielsweise durch Mittelwertbildung der einzelnen ermittelten Abstände.

Aus der Beschreibung dieses Ausführungsbeispiels wird deutlich, daß durch die sichere und dem Auflösungsvermögen entsprechende Genauigkeit eine Abstandsbestimmung zwischen einer Basisstation und einem ID-Geber möglich ist, so daß auf diese Weise ein sicheres Erkennen einer unberechtigten Streckenverlängerung erkennbar ist. Zur Erhöhung der Betriebssicherheit kann vorgesehen sein, mit unterschiedlichen Codesignalen zu arbeiten, wozu beispielsweise auch eine Vorprogrammierung des ID-Gebers durch eine vorgegebene Schwingungsanzahl als Codesignal gehört.

Eine schlüssellose Zugangsberechtigungskontrolleinrichtung 47 umfaßt eine Basisstation B mit einer Sende-Empfangseinheit 48. Die schlüssellose Zugangsberechtigungskontrolleinrichtung 47 dient zum Überprüfen der Zugangsberechtigung zu einem Kraftfahrzeug; daher ist die Basisstation B in einem Fahrzeug angeordnet. Der Zugangsberechtigungskontrolleinrichtung 47 ist ferner ein mobiler ID-Geber ID zugeordnet, der von einer zum Benutzen des Kraftfahrzeuges berechtigten Person mitgeführt wird.

Die Sende-Empfangseinheit 48 umfaßt einen Transceiver 49 zum Senden eines Fragesignals auf einer hochfrequenten Funkstrecke sowie einen oder mehrere Sender 50 zum Senden des niederfrequenten Funksignals. Der Transceiver 49 ist an einen Prozessor 51 angeschlossen, der die Sende-Empfangstätigkeit des Transceivers 49 steuert. Am Ausgang des Transceivers 49 ist ein Phasenkomparator 52 angeschlossen, dessen weiterer Eingang an die niederfrequente Referenz 53 angeschlossen ist. Der Ausgang des PLL-Schaltkreises 52 beaufschlagt einen Eingang des Prozessors 51. Zur Verwirklichung des erfindungsgemäßen Verfahrens ist es jedoch ausreichend, anstelle des Tranceivers 49 einen Receiver einzusetzen.

Der ID-Geber ID besteht im wesentlichen aus einem Prozessor 54 und einer Sende-Empfangseinheit 55, an der eine NF-Antenne 56 angeschlossen ist.

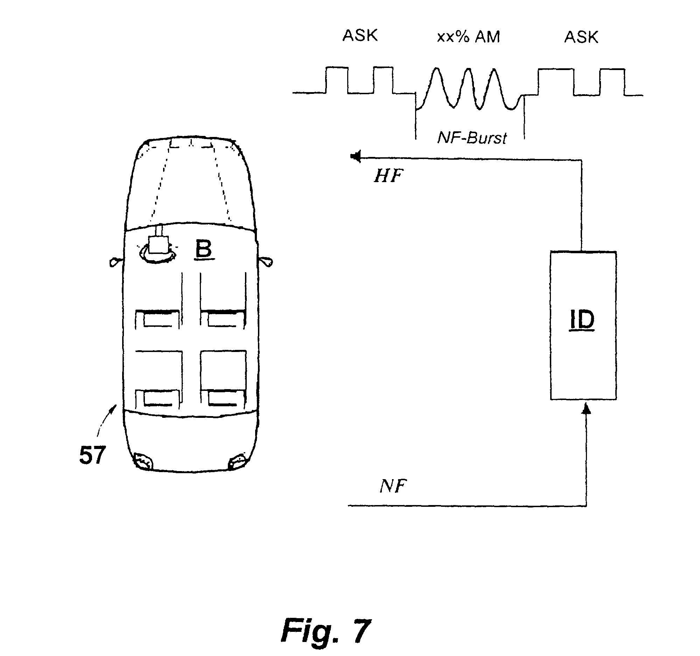

Im Betrieb der Zugangsberechtigungskontrolleinrichtung 47 wird von der Sende-Empfangseinheit 48 im Kraftfahrzeug 57, wie in Figur 7 schematisiert angedeutet, auf einer NF-Strecke zyklisch ein Fragesignal gesendet.

Die Sendeleistung zum Senden dieses Signals ist so ausgelegt, daß dieses Signal von dem ID-Geber ID in einem Umkreis von etwa 3 Metern um das Kraftfahrzeug 57 herum empfangbar ist. Befindet sich der ID-Geber ID im Empfangsbereich dieses NF-Fragesignals wird er durch dieses Signal geweckt und in seinen betriebsbereiten Zustand geschaltet. Ist der ID-Geber ID betriebsbereit, sendet dieser auf einer HF-Strecke ein Antwortdatentelegramm im ASK-Modus (amplitude shift keying-Modus). An einer vorbestimmten Position innerhalb dieses Datentelegrammes wechselt die Modulationsart des ID-Gebers von der ASK-Modulation auf eine reine Amplitudenmodulation. Die Amplitudenmodulation der zum Senden des Antwortsignals verwendeten Trägerwelle erfolgt mit derjenigen des auf der NF-Strecke von dem ID-Geber ID empfangenen Fragesignals. Der Zeitpunkt und die Zeitdauer dieses amplitudenmodulierten Antwortsignals ist zwischen der Basisstation B und dem ID-Geber ID vereinbart und kann zur Erhöhung der Betriebssicherheit gemäß einem bestimmten Algorhithmus geändert werden. Ist diese amplitudenmodulierte Trägerwelle für die vorbestimmte Zeitdauer von dem ID-Geber ID gesendet worden, wechselt seine Betriebsart wieder in die zur Datenübermittlung vorgesehene ASK-Modulation. Aus dieser prinzipiellen Darstellung wird deutlich, daß mit dem Betrieb der Zugangsberechtigungskontrolleinrichtung 47 zeitweise ein Volldublexbetrieb realisiert ist.

Das von dem ID-Geber ID gesendete Antwortsignal wird von dem Transceiver 49 der Basisstation B empfangen. Der analoge Anteil des empfangenen Datentelegramms, nämlich der amplitudenmodulierte Bestandteil beaufschlagt den PLL-Schaltkreis 57 und wird bezüglich seiner Phasenlage mit der Phasenlage des ursprünglich gesendeten Fragesignals verglichen. Befindet sich der ID-Geber ID innerhalb des vorgesehenen Betriebsbereiches werden beide Phasenlagen durch den Phasenkomparator 52 innerhalb einer vorgegebenen Toleranz als konstant zueinander erkannt werden, wenn keine weiteren Relaisstationen zwischengeschaltet sind. Es wird deutlich, daß bei diesem Verfahren ein Vergleich der Phasenlagen auf relativem Wege ohne eine Bestimmung der jeweilig absoluten Phasenlage erfolgt.

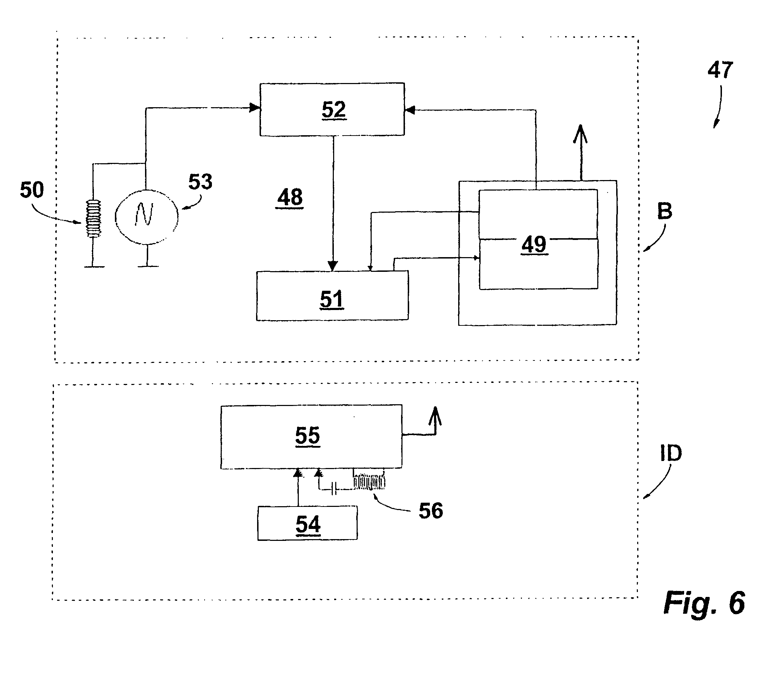

Der NF-Oszillator 53 wird bei dem in Figur 6 dargestellten Ausführungsbeispiel freischwingend betrieben, so daß sich seine natürlichen Frequenzschwankungen entsprechend auch im demodulierten Antwortsignal wiederfinden. Durch diese Maßnahme ist die Betriebssicherheit der Zugangsberechtigungskontrolleinrichtung 47 gegenüber Manipulationen weiter erhöht.

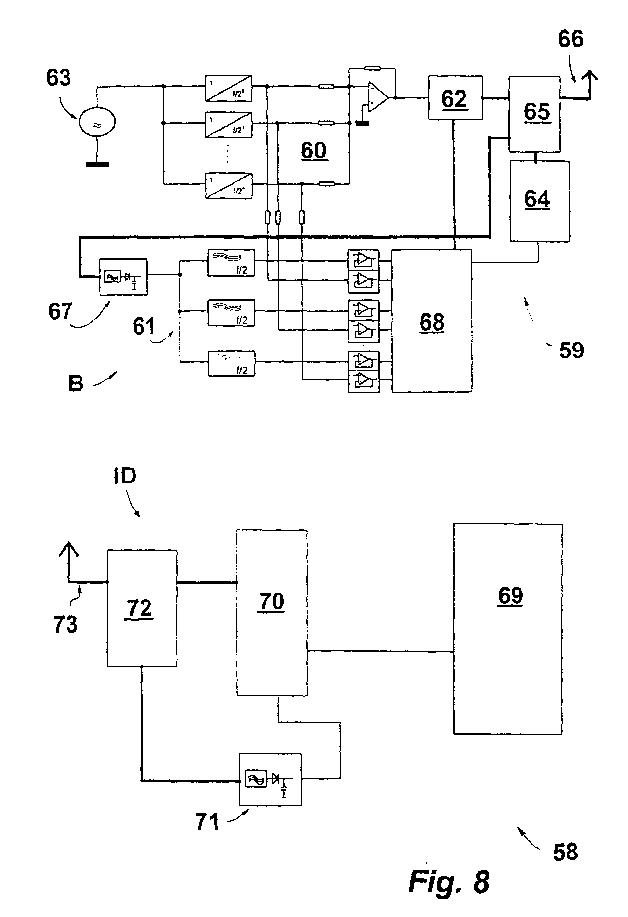

Eine weitere Zugangsberechtigungskontrolleinrichtung 58 ist schematisiert in Figur 8 in einem Blockschaltbild wiedergegeben. Die Basisstation B dieser Zugangsberechtigungskontrolleinrichtung 58 besteht im wesentlichen aus einer Sende-Empfangseinheit 59, einer Modulationseinheit 60 zum Bereitstellen eines Frequenzgemisches zum Modulieren einer Trägerwelle eines Fragesignals und aus einem Phasenkomparator 61 zum entsprechenden Filtern einer mit dem Modulationsgemisch modulierten Trägerwelle auf einer Antwortstrecke. Die Sende-Empfangseinheit 59 umfaßt einen HF-Sender 62 zum Senden einer mit einem Modulationsgemisch modulierten Trägerwelle, einen Transceiver 64, wobei der Sender 62 und der Transceiver 64 über ein Combiner-Netzwerk 65 an eine gemeinsame Sende-Empfangsantenne 66 angeschlossen sind. Ferner ist der Sende-Empfangseinheit 59 eine Referenz 63 zugeordnet. An das Combiner-Netzwerk 65 ist zum Demodulieren eines empfangenen Antwortsignals ferner ein Demodulator 67 angeschlossen. Ausgangsseitig ist der Demodulator 67 mit dem Phasenkomparator 61 verbunden. Zur Steuerung der Sende-Empfangsvorgänge des Transceivers 64 und des Senders 62 ist ein Prozessor 68 vorgesehen.

Ein mobiler ID-Geber ID gehört zur Zugangsberechtigungskontrolleinrichtung 58 und wird von einer zum Benutzen des Kraftfahrzeuges berechtigten Person mitgeführt. Der ID-Geber besteht im wesentlichen aus einem Prozessor 69, einem Transceiver 70, einem Demodulator 71, einem Combiner-Netzwerk 72 und einer Sende-Empfangsantenne 73. Mit der Sende-Empfangsantenne 73 können von der Sende-Empfangseinheit 59 der Basisstation B gesendete Fragesignale empfangen und durch den Demodulator 26 demoduliert werden. Ausgangsseitig ist der Demodulator 71 an einen Eingang des Transceivers 70 angeschlossen, so daß das demodulierte Fragesignal zum Modulieren des Antwortsignals verwendet werden kann.

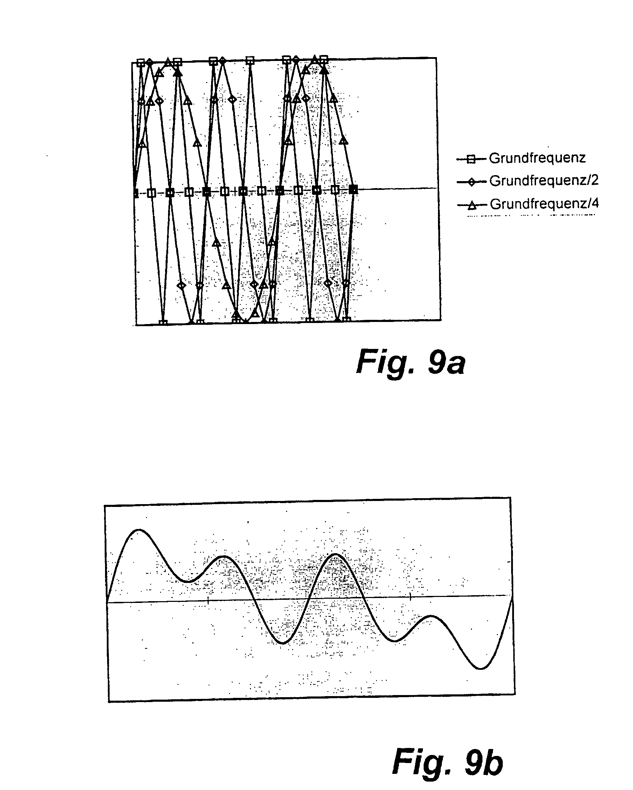

Mit der Modulationseinheit 60 wird ein Frequenzgemisch bereitgestellt, mit der eine Trägerwelle zum Senden eines Fragesignals moduliert wird. Das Modulationsfrequenzgemisch besteht aus einer Grundfrequenz und mehreren weiteren Frequenzanteilen, die jeweils durch zwei geteilte Anteile der Grundfrequenz sind. In Figur 9a ist in einem Diagramm ein solches Frequenzgemisch darstellend das Fragesignal wiedergegeben. Die Variation des Amplitudenverlaufs dieses Frequenzgemisches ist in Figur 9b dargestellt.

Mit diesem Modulationsfrequenzgemisch wird eine Trägerwelle auf einer HF-Strecke von beispielsweise 433 MHz moduliert und über die Sende-Empfangsantenne 66 gesendet. Befindet sich der ID-Geber ID in einem vorbestimmten Abstand zum Kraftfahrzeug, wird dieses Signal empfangen und mittels des Demodulators 71 demoduliert. Das zurückgesendete Antwortsignal des ID-Gebers ID erfolgt durch eine Modulation einer Trägerwelle von beispielsweise 868 MHz in dem Transceiver 70 mit dem demodulierten Fragesignal und somit mit dem ursprünglich zur Modulation des Fragesignals verwendeten Frequenzgemisch. Dieses Antwortsignal wird ID-Geber-seitig gesendet und von der Sende-Empfangseinheit 59 empfangen, demoduliert und anschließend in dem Phasenkomparator 61 gefiltert. Als Demodulator 67 ist ein Diodendetektor vorgesehen. Die Eckfrequenzen der in dem Phasenkomparator 61 enthaltenen Filter entsprechen der Grundfrequenz und den weiteren Frequenzanteilen. Durch einen Phasenvergleich der jeweils gleichfrequenten Anteile kann die Entfernung des ID-Gebers ID von der Basisstation B berechnet werden. In Abhängigkeit von dem festgestellten Abstand, der unmittelbar einen Rückschluß auf die zurückgelegte Funkstrecke des Frage- und Antwortsignals zuläßt, läßt sich ermitteln, ob das Antwortsignal unmittelbar vom ID-Geber ID gesendet worden ist, oder ob der Empfang eines Antwortsignals unter Zwischenschaltung einer unbefugten Streckenverlängerung erfolgt ist.

Bei diesem Ausführungsbeispiel läßt sich die Entfernungsmessung auch zum erleichterten Auffinden eines Kraftfahrzeuges, welches beispielsweise in einem Parkhaus abgestellt ist, verwenden. In diesem Fall müßte vom ID-Geber ID das Senden des Fragesignals durch die Basisstation B ausgelöst werden. Entsprechend könnte einem Benutzer angezeigt werden, ob er sich seinem Kraftfahrzeug nähert oder ob er sich von diesem entfernt.

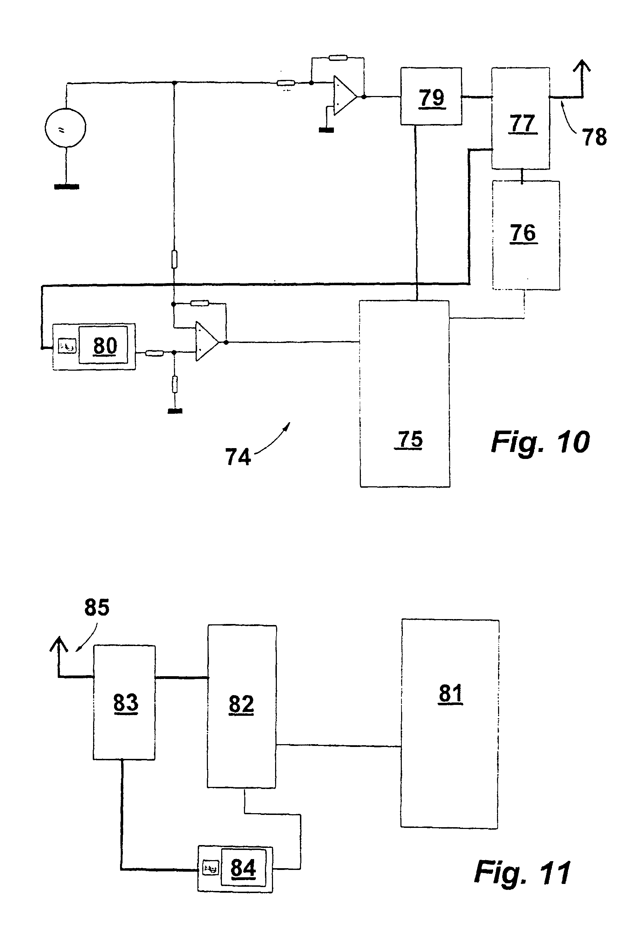

Im folgenden wird ein weiteres Ausführungsbeispiel der Erfindung unter Bezugnahme auf die Figuren 10 bis 12 erläutert. Einem nicht näher dargestellten Kraftfahrzeug ist eine Sende-Empfangseinheit 74 der Basisstation zugeordnet, die zum Durchführen einer schlüssellosen Zugangsberechtigungskontrolle vorgesehen ist. Die Sende-Empfangseinheit 74 besteht im wesentlichen aus einem Prozessor 75, einem Transceiver 76, der für die Datenkommunikation mit einem mobilen ID-Geber vorgesehen ist, einem Combiner-Netzwerk 77 und einer an dieses Netzwerk 77 angeschlossenen Sende-Empfangsantenne 78. Die Datenkommunikation mit dem ID-Geber erfolgt beispielsweise bei 868 MHz. Diese Datenkommunikation enthält Frage-Antwort-Dialoge, aus denen sich in Abhängigkeit von einem empfangenen Antwortcode des ID-Gebers die Berechtigung des diesen ID-Geber mitführenden Person zum Öffnen des Kraftfahrzeuges ableitet. Zum Durchführen des erfindungsgemäßen Verfahrens ist es lediglich notwendig, daß der Basisstation anstelle des in den Figuren dargestellten Transceivers 76 ein Receiver zum Empfangen des von dem ID-Geber gesendeten Antwortsignales zugeordnet ist.

Die Sende-Empfangseinheit 74 umfaßt ferner einen in dem dargestellten Ausführungsbeispiel bei 433 MHz arbeitetenden Sender 79. Der Ausgang des Senders 79 beaufschlagt ebenfalls das Combiner-Netzwerk 77, so daß sowohl von dem Transceiver 76 als auch von dem Sender 79 die Sende-Empfangsantenne 78 verwendet wird. Der Sender 79 dient zum Senden einer linear frequenzmodulierten Trägerwelle als Fragesignal, mit dem nach seinem Empfang als Antwortsignal auf die Entfernung des dieses Fragesignal zurücksendenden ID-Gebers geschlossen werden kann.

An das Combiner-Netzwerk 77 ist femer ein FM-Demodulator 80 angeschlossen, mit dem das über die Sende-Empfangsantenne 78 empfangene frequenzmodulierte Antwortsignal demoduliert wird. Ausgangsseitig ist der Demodulator 80 an den Prozessor 75 angeschlossen, so daß durch den Prozessor 75 ein Vergleich des empfangenen, demodulierten Antwortsignals mit dem zuvor gesendeten modulierten Fragesignal möglich ist.

Ein nicht näher dargestellter ID-Geber umfaßt - wie in Figur 11 dargestellt - einen Prozessor 81 und einen für die Datenkommunikation vorgesehenen Transceiver 82. Der Transceiver 82 ist ausgangsseitig an den Eingang eines Combiner-Netzwerkes 83 angeschlossen, an welches Netzwerk 83 ebenfalls eine Sende-Empfangsantenne 85 angeschlossen ist. Ferner ist ausgangsseitig an das Netzwerk 83 ein FM-Demodulator 84 angeschlossen, der zum Demodulieren eines von der Sende-Empfangseinheit 74 gesendeten Fragesignals vorgesehen ist. Ausgangsseitig ist der FM-Demodulator 84 an einen Eingang des Transceivers 82 angeschlossen. Damit wird bezweckt, daß das durch den FM-Demodulator 84 demodulierte Fragesignal unmittelbar zum Modulieren des Transceivers 82 verwendet wird. Das von dem ID-Geber zurückgesendete Antwortsignal ist dann Teil der ohnehin stattfindenden Datenkommunikation.

Zur Bestimmung der Entfernung des ID-Gebers vom Kraftfahrzeug bzw. von der Sende-Empfangseinheit 74 wird durch den Sender 79 der Sende-Empfangseinheit 74 ein Fragesignal in Form einer linear frequenzmodulierten Trägerwelle (433 MHz) gesendet. Die Verwendung einer linear frequenzmodulierten Trägerwelle wirkt sich günstig auf die spätere Auswertung aus. Dieses Fragesignal wird, wenn sich der ID-Geber in einer bestimmten Entfernung zur Sende-Empfangseinheit 74 befindet, empfangen, demoduliert und zum Modulieren des Transceivers 82 des ID-Gebers verwendet. Das von dem ID-Geber auf der 868 MHz-Strecke zurückgesendete Antwortsignal wird von der Sende-Empfangseinheit 74 empfangen und in dem Demodulator 80 demoduliert. Durch die zurückgelegte Funkstrecke besteht zwischen der linear frequenzmodulierten Trägerwelle des Fragesignals und derjenigen des Antwortsignals ein zeitlicher Versatz. Dieser zeitliche Versatz resultiert aus der zurückgelegten Funkstrecke und ist um so größer, je größer die zurückgelegte Funkstrecke ist. Eine unerwünschte Streckenverlängerung macht sich somit in einem relativ großen zeitlichen Versatz zwischen der Modulationsfrequenzfunktion des Fragesignals und derjenigen des Antworsignals bemerkbar.

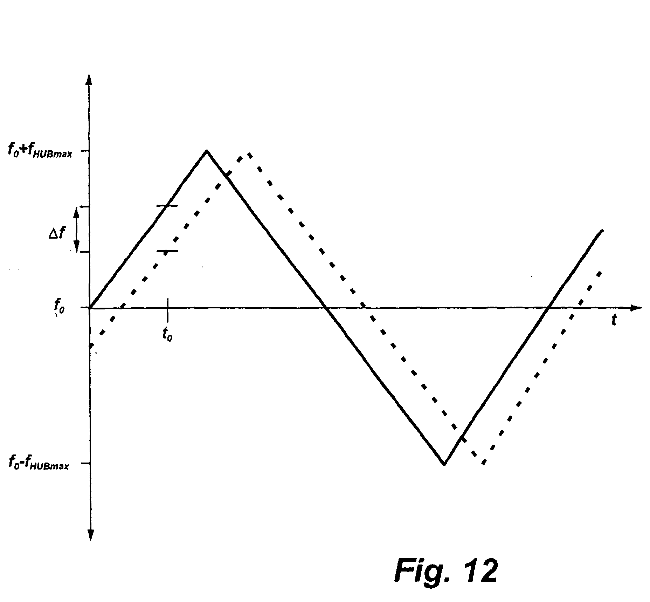

In Figur 12 ist in einem Diagramm eine linear frequenzmodulierte Trägerwelle als Fragesignal wiedergegeben, (durchgezogen gezeigte Modulationskurve), wobei auf der x-Achse die Zeitachse und auf der y-Achse die Frequenz aufgetragen ist. Das Maximum (fₒ + f_{HUBmax}) und das Minimum (fₒ - f_{HUBmax}) dieser Frequenzkurve stellt den zur Modulieren der Trägerwelle (f₀) verwendeten Frequenzhub dar. Gestrichelt ist das von dem ID-Geber gespiegelte und von der Sende-Empfangseinheit 74 empfangene und demodulierte Antwortsignal mit dem entsprechenden, die zurückgelegte Funkstrecke widerspiegelnden zeitlichen Versatz aufgetragen. Ein Vergleich der Funktionswerte der Trägerfrequenzkurve des Fragesignals mit denjenigem des Antwortsignals in einem Zeitpunkt *t*_{*0*} läßt sich durch Subtrahieren der Beträge der beiden Funktionswerte oder auch durch Subtrahieren der beiden quadrierten Funktionswerte durchführen. Ein solcher Vergleichsschritt läßt sich mit geringem hardwareseitigem Aufwand oder auch softwareseitig durch den Prozessor 75 realisieren. Überschreitet die auf diese Weise ermittelte Differenzfrequenz (Δf) ein bestimmtes Maß, bedeutet dies, daß die zurückgelegte Funkstrecke (Sende-Empfangseinheit 74 - ID-Geber - Sende-Empfangseinheit 74) größer ist als ein vorbestimmter Funktionsbereich, der beispielsweise mit 5 - 10 Metern um die Sende-Empfangseinheit 74 angenommen sei. Der ID-Geber befindet sich daher nicht in der Nähe des Kraftfahrzeugs; offensichtlich ist die Funkstrecke manipulativ verlängert. In diesem Fall wird eine Zugangsberechtigung verneint. Liegt die Differenzfrequenz (Δf) innerhalb des tolerierten Intervalls, wird der ID-Geber als im Funktionsbereich befindlich angesehen und entsprechend die gewünschte Aktion ausgelöst - die Kraftfahrzeugtüren werden entriegelt.

Die Auflösung dieses Verfahrens hinsichtlich der zurückgelegten Funkstrecke wird durch die Wahl der Modulationsfrequenz bzw. durch den Frequenzhub bestimmt. Durch die Variation der Modulationsfrequenz kann vermieden werden, daß die Meßwerte sich in regelmäßigen Abständen (alle 360°) wiederholen. Dabei ist die niedrigste Frequenz als Maß für die maximal zu messende Entfernung zu betrachten; die höchste Frequenz in dem Frequenzgemisch bestimmt die Auflösung des Systems.

### Zusammenstellung der Bezugszeichen

- 1: Schlüssellose Zugangsberechtigungskontrolleinrichtung
- 2: Basisstation
- 3: ID-Geber
- 4: Sende-Empfangseinheit
- 5: HF-Sender
- 6: HF-Empfänger
- 7: Mikrocontroller
- 8: Periodenzähler
- 9: Start-Eingang
- 10: Stop-Eingang
- 11: UND-Glied
- 12: Sende-Empfangseinheit
- 13: HF-Sender
- 14: HF-Empfänger
- 15: Mikrocontroller
- 16: Datenleitung
- 17: Tastleitung
- 18: Auswertelogik
- 19: Schlüssellose Zugangsberechtigungskontrolleinrichtung
- 20: Basisstation
- 21: ID-Geber
- 22: Sende-Empfangsantenne
- 23: Signalgenerator
- 24: Leistungsteiler
- 25: Zählerschaltkreis
- 26: HF-Schalter
- 27: Zählerschaltkreis
- 28: Zählglied
- 29: Zählglied
- 30: Mikrocontroller
- 31: Frequenzteilungsschaltkreis
- 32: Frequenzteiler
- 33: Bandpaßfilter
- 34: Verstärker
- 35: Frequenzteilungsschaltkreis
- 36: Sende-Empfangsantenne
- 37: HF-Schalter
- 38: Verstärker
- 39: HF-Schalter
- 40: Zählglied
- 41: Frequenzteilungsschaltkreis
- 42: Leistungsteiler
- 43: Signalgenerator
- 44: Schlüssellose Zugangsberechtigungskontrolleinrichtung
- 45: Lokaloszillator
- 46: Mischer
- 47: Schlüssellose Zugangsberechtigungskontrolleinrichtung
- 48: Sende-Empfangseinheit
- 49: Transceiver
- 50: NF-Sender
- 51: Prozessor
- 52: PLL-Schaltkreis
- 53: Frequenzgenerator
- 54: Prozessor
- 55: Sende-Empfangseinheit
- 56: NF-Antenne
- 57: Kraftfahrzeug
- 58: Schlüssellose Zugangsberechtigungskontrolleinrichtung
- 59: Sende-Empfangseinheit
- 60: Modulationseinheit
- 61: Phasenkomparator
- 62: HF-Sender
- 63: Referenz
- 64: Transceiver
- 65: Combiner-Netzwerk
- 66: Sende-Empfangsantenne
- 67: Demodulator, Diodendetektor
- 68: Prozessor
- 69: Prozessor
- 70: Transceiver
- 71: Demodulator
- 72: Combiner-Netzwerk
- 73: Sende-Empfangsantenne
- B: Basisstation
- ID: ID-Geber

- 74: Sende-Empfangseinheit
- 75: Prozessor
- 76: Transceiver
- 77: Combiner-Netzwerk
- 78: Sende-Empfangsantenne
- 79: Sender
- 80: FM-Demodulator
- 81: Prozessor
- 82: Transceiver
- 83: Combiner-Netzwerk
- 84: FM-Demodulator
- 85: Sende-Empfangsantenne

## Patentansprüche

1. Verfahren zum Durchführen einer schlüssellosen Zugangsberechtigungskontrolle mit einer drahtlosen Kommunikation zwischen einer einer Basisstation (2, 20, B) zugeordneten Sende-Empfangseinheit (4, 22, 48, 59, 74) und einem mobilen Identifikationsgeber (ID-Geber) (3, 21, ID) zum Überprüfen der Zugangsberechtigung einer den ID-Geber (3, 21, ID) mitführenden Person, umfassend:
- Senden eines Codesignals durch die Sende-Empfangseinheit der Basisstation (2, 20, B),
- Empfangen dieses Codesignals durch den ID-Geber (3, 21, ID),
- Durchführen einer von der Sende-Empfangseinheit (4, 22, 48, 59, 74) detektierbaren und von dem ID-Geber (3, 21, ID) ausgeführten Aktion als Antwortsignal des ID-Gebers (3, 21, ID) auf den Empfang des Codesignals und
- Detektieren der Aktion des ID-Gebers (3, 21, ID) und Bestimmen des Abstandes zwischen der Basisstation (2, 20, B) und dem ID-Geber (3, 21, ID),
**dadurch gekennzeichnet, daß** die Abstandsbestimmung auf Grundlage einer Relativbestimmung erfolgt, bei der die Unterschiede einer mit der Signallaufzeit korrelierenden und sich wegabhängig ändernden Signalcharakteristik zwischen einem basisstationseitig überwachten Referenzcodesignal und dem von der Sende-Empfangseinheit (4, 22, 48, 59, 74) empfangenen Antwortsignal ausgewertet werden.

2. Verfahren nach Anspruch 1, **dadurch gekennzeichnet, daß** zur Abstandsbestimmung gleichzeitig mit dem Senden des Codesignals durch die Sende-Empfangseinheit (4, 22) eine Zählung der Schwingungen der gesendeten Trägerwelle durch die Basisstation (2, 20) gestartet und nach einer durch den ID-Geber (3, 21) nach Empfang des Codesignals ausgeübten Aktion gestoppt und anschließend aus dem Schwingungszählergebnis der Abstand zwischen der Basisstation (2, 20) und dem ID-Geber (3, 21) ermittelt wird.

3. Verfahren nach Anspruch 2, **dadurch gekennzeichnet, daß** in einem ersten Schritt zur Abstandsbestimmung durch die Sende-Empfangseinheit (4) ein Befehl SENDER ID-GEBER EIN gesendet wird, woraufhin der ID-Geber (3) auf einer ersten Frequenz f₁ zu senden beginnt, daß in einem zweiten Schritt nach einer vorbestimmten Zeitspanne von der Sende-Empfangseinheit (4) auf einer zweiten Frequenz f₂ als Codesignal ein Befehl SENDER ID-GEBER AUS gesendet wird, mit welcher Befehlsaussendung die Schwingungszählung der durch die Sende-Empfangseinheit (4) empfangenen Trägerwelle gestartet und gestoppt wird, wenn durch die Sende-Empfangseinheit (4) der Basisstation (2) kein Sendesignal des ID-Gebers (3) mehr detektierbar ist.

4. Verfahren nach Anspruch 2, **dadurch gekennzeichnet, daß** von der Sende-Empfangseinheit der Basisstation ein Codesignal gesendet, dieses von dem ID-Geber empfangen und zurückgesendet wird, wobei die Schwingungszählung der Trägerwelle gestoppt wird, wenn das Codesignal vollständig von der Sende-Empfangseinheit wieder empfangen worden ist.

5. Verfahren nach Anspruch 2, **dadurch gekennzeichnet, daß** von der Sende-Empfangseinheit (22) der Basisstation (20) ein Codesignal gesendet und gleichzeitig eine erste Schwingungszählung der gesendeten Trägerwelle gestartet wird, welches Codesignal von dem ID-Geber (21) empfangen und zurückgesendet wird, wobei mit dem eingehenden von dem ID-Geber (21) zurückgesendete Codesignal eine zweite Schwingungszählung gestartet wird, und die zweite Schwingungszählung gestoppt wird, wenn durch die erste Schwingungszählung ein Zählerstand erreicht ist, der der doppelten Anzahl der dem Codesignal entsprechenden Schwingungen entspricht.

6. Verfahren nach Anspruch 4 oder 5, **dadurch gekennzeichnet, daß** als Codesignal eine vorbestimmte Anzahl an Schwingungen einer Trägerwelle gesendet wird.

7. Verfahren nach einem oder mehreren der Ansprüche 2 bis 6, **dadurch gekennzeichnet, daß** bei der Zählung der Schwingungen der Trägerwelle nur jede 2^{x}-te Schwingung gezählt wird.

8. Verfahren nach Anspruch 1, **dadurch gekennzeichnet, daß** als Antwortsignal von dem ID-Geber (ID) eine modulierte Trägerwelle gesendet wird, deren für die Modulation vorgesehene Größe (Frequenz und/oder Amplitude) mit dem von der Sende-Empfangseinheit gesendeten Fragesignal an den ID-Geber (ID) übermittelt wird, und daß nach Empfang des von dem ID-Geber (ID) gesendeten Antwortsignals durch die Sende-Empfangseinheit die Phasenlage des empfangenen und demodulierten Antwortsignals mit derjenigen des ursprünglich gesendeten Fragesignals verglichen wird.

9. Verfahren nach Anspruch 8, **dadurch gekennzeichnet, daß** die Trägerwelle des Antwortsignals amplitudenmoduliert ist.

10. Verfahren nach Anspruch 8 oder 9, **dadurch gekennzeichnet, daß** das Fragesignal von der Sende-Empfangseinheit auf derjenigen Frequenz gesendet wird, die zum Modulieren des von dem ID-Geber (ID) auf einer anderen Frequenz gesendeten Antwortsignals verwendet wird.

11. Verfahren nach einem der Ansprüche 8 bis 10, **dadurch gekennzeichnet, daß** das Fragesignal eine Codierung enthält.

12. Verfahren nach Anspruch 10 oder 11, **dadurch gekennzeichnet, daß** ein auf einer Niederfrequenzstrecke gesendetes Wecksignal zum Wecken des ID-Gebers (ID) das Fragesignal ist, mit dem die Trägerwelle des Antwortsignals amplitudenmoduliert wird.

13. Verfahren nach einem der Ansprüche 10 bis 12, **dadurch gekennzeichnet, daß** sich die Frequenz des Fragesignals während seiner Sendedauer ändert.

14. Verfahren nach Anspruch 8, **dadurch gekennzeichnet, daß** als Fragesignal von der Sende-Empfangseinheit eine mit einem Modulationsgemisch aus einer oder mehrerer Modulationsvariablen modulierte Trägerwelle gesendet wird, mit welchem Modulationsgemisch nach einem Demodulieren des Fragesignals durch den ID-Geber (ID) das von diesem gesendete Antwortsignal moduliert wird.

15. Verfahren nach Anspruch 14, **dadurch gekennzeichnet, daß** als Modulationsgemisch ein Frequenzgemisch verwendet wird, welches nach Empfang durch die Sende-Empfangeinheit bezüglich seiner ursprünglichen Frequenzanteile gefiltert wird, und daß der Schritt des Phasenvergleichens des ursprünglich gesendeten Fragesignals mit dem empfangenen Antwortsignal bezüglich der einzelnen, das Modulationsgemisch bildenden Frequenzanteile durchgeführt wird.

16. Verfahren nach Anspruch 1, **dadurch gekennzeichnet, daß** als Fragesignal von der Sende-Empfangseinheit eine modulierte Trägerwelle gesendet und nach Empfang des von dem ID-Geber gesendeten, gleichermaßen modulierten Antwortsignals durch die Sende-Empfangseinheit in einem Zeitpunkt (t₀) der Funktionswert der Modulationsfunktion der Modulationsvariablen des empfangenen Antwortsignals mit dem Funktionswert der Modulationsfunktion des ursprünglich durch die Sende-Empfangseinheit gesendeten Fragesignals verglichen und das Vergleichsergebnis zur Bestimmung des Abstandes der Basisstation von dem ID-Geber ausgewertet wird.

17. Verfahren nach Anspruch 16, **dadurch gekennzeichnet, daß** zum Vergleichen der beiden Funktionswerte der Schritt einer Differenzbildung der Beträge der zeitgleichen Funktionswerte der Modulationsvariablen durchgeführt wird.

18. Verfahren nach Anspruch 16 oder 17, **dadurch gekennzeichnet, daß** in Abhängigkeit von dem ermittelten Vergleichswert (Δf) in einem nachgeschalteten Schritt eine Bestimmung erfolgt, ob sich der ID-Geber innerhalb eines vorbestimmten Empfangsbereiches zur Basisstation befindet.

19. Verfahren nach einem der Ansprüche 16 bis 18, **dadurch gekennzeichnet, daß** sich die Frequenz der für das Fragesignal vorgesehenen Trägerwelle (433 MHz) von derjenigen des Antwortsignals (868 MHz) unterscheidet.

20. Verfahren nach einem der Ansprüche 16 bis 19, **dadurch gekennzeichnet, daß** die als Fragesignal vorgesehene Trägerwelle linear frequenzmoduliert gesendet wird.

21. Verfahren nach Anspruch 20, **dadurch gekennzeichnet, daß** das ID-Geber seitig demodulierte Fragesignal zum Modulieren einer von dem ID-Geber als Antwortsignal gesendeten modulierten Trägerwelle verwendet wird.

22. Verfahren nach einem der Ansprüche 16 bis 19, **dadurch gekennzeichnet, daß** die als Fragesignal vorgesehene Trägerwelle amplitudenmoduliert gesendet wird.

23. Schlüssellose Zugangsberechtigungskontrolleinrichtung mit einer eine Sende-Empfangseinheit (4, 22, 48, 59, 74) sowie ein Steuerund Auswerteglied (7, 30, 51, 68, 75) aufweisenden Basisstation (2, 20, B) und einem mobilen, eine Sende-Empfangseinheit (12, 36, 55) aufweisenden Identifikationgeber (ID-Geber) (3, 21. ID) zum Überprüfen der Zugangsberechtigung einer den ID-Geber (3, 21, ID) mitführenden Person, mit welcher Basisstation (2, 20, B) eine Abstandsermittlung zum Bestimmen des Abstandes zwischen der Basisstation (2,20, B) zum ID-Geber (3, 21, ID) durchführbar ist, **dadurch gekennzeichnet, daß** der Basisstation (2, 20, B) Mittel zum Durchführen einer Relativbestimmung einer mit der Laufzeit eines Signales korrelierenden Signalcharakteristik zugeordnet sind, welche Mittel eine Detektionseinrichtung zum Detektieren der Signalcharakteristik, ein Glied zum Erfassen eines basisstationseitig überwachten Referenzcodesignales sowie ein Vergleicherglied zum Vergleichen der Signalcharakteristik des Referenzcodesignales im Zeitpunkt des Empfanges eines von dem ID-Geber (3, 21, ID) gesendeten Antwortsignales umfaßt.

24. Verfahren nach einem der Ansprüche 1 bis 22, **dadurch gekennzeichnet, daß** das Verfahren im Rahmen einer schlüssellosen Zugangsberechtigungskontrolle eines Kraftfahrzeugs eingesetzt wird.

## Claims

1. Method of accomplishing a keyless access authorisation check by means of a wireless communication between a transceiver unit (4, 22, 48, 58, 74), associated with a base station (2, 20, B), and a mobile identification transmitter (ID transmitter) (3, 21, ID) for checking the access authorisation of a person carrying the ID transmitter (3, 21, ID), said method comprising:
- sending a code signal through the transceiver unit of the base station (2, 20, B),
- receiving this code signal through the ID transmitter (3, 21, ID),
- accomplishing an action, which is detectable by the transceiver unit (4, 22, 48, 59, 74) and is executed by the ID transmitter (3, 21, ID), as the respond signal of the ID transmitter (3, 21, ID) upon receipt of the code signal, and
- detecting the action of the ID transmitter (2, 31, ID) and determining the distance between the base station (2, 20, B) and the ID transmitter (3, 21, ID),
**characterised in that** the distance is determined on the basis of a relative determination, wherein the differences in a signal characteristic, which correlates with the signal transit time and changes in dependence on the path, between a reference code signal, monitored at the base station end, and the respond signal, received by the transceiver unit (4, 22, 48, 59, 74), are evaluated.

2. Method according to claim 1, **characterised in that**, to determine the distance simultaneously with the sending of the code signal by the transceiver unit (4, 22), a counting of the oscillations of the sent carrier wave through the base station (2, 20) is started and stopped after an action which is exerted by the ID transmitter (3, 21) upon receipt of the code signal, and subsequently the distance between the base station (2, 20) and the ID transmitter (3, 21) is determined from the result of counting the oscillations.

3. Method according to claim 2, **characterised in that**, in a first step for determining the distance, a SENDER ID TRANSMITTER ON command is sent by the transceiver unit (4), whereupon the ID transmitter (3) begins to send on a first frequency f₁, **in that**, in a second step after a predetermined time interval, a SENDER ID TRANSMITTER OFF command is sent as a code signal by the transceiver unit (4) on a second frequency f₂, the counting of the oscillations of the carrier wave, received by the transceiver unit (4), is started by said command transmission and stopped when no sent signal of the ID transmitter (3) is detectable any more by the transceiver unit (4) of the base station (2).

4. Method according to claim 2, **characterised in that**, a code signal is sent by the transceiver unit of the base station, and said signal is received and sent back by the ID transmitter, the counting of the oscillations of the carrier wave being stopped when the code signal has been fully received again by the transceiver unit.

5. Method according to claim 2, **characterised in that** a code signal is sent by the transceiver unit (22) of the base station (20), and at the same time a first counting of the oscillations of the sent carrier wave is started, which code signal is received and sent back by the ID transmitter (21), a second counting of the oscillations being started with the incoming code signal sent back by the ID transmitter (21), and the second counting of the oscillations being stopped when a counting state, which corresponds to twice the number of oscillations corresponding to the code signal, is reached by the first counting of the oscillations.

6. Method according to claim 4 or 5, **characterised in that** a predetermined number of oscillations of a carrier wave is sent as the code signal.

7. Method according to one or more of claims 2 to 6, **characterised in that** only every 2^{nd} oscillation is counted in the counting of the oscillations of the carrier wave.

8. Method according to claim 1, **characterised in that** a modulated carrier wave is sent as the respond signal by the ID transmitter (ID), the parameter (frequency and/or amplitude) of said wave, provided for the modulation, being transmitted to the ID transmitter (ID) with the interrogation signal sent by the transceiver unit, and **in that**, upon the transceiver unit receiving the respond signal sent by the ID transmitter (ID), the phase position of the received and demodulated respond signal is compared with that of the originally sent interrogation signal.

9. Method according to claim 8, **characterised in that** the carrier wave of the respond signal is amplitude-modulated.

10. Method according to claim 8 or 9, **characterised in that** the interrogation signal is sent by the transceiver unit at the frequency which is used to modulate the respond signal sent by the ID transmitter (ID) on a different frequency.

11. Method according to one of claims 8 to 10, **characterised in that** the interrogation signal contains a coding.

12. Method according to claim 10 or 11, **characterised in that**, a prompt signal, sent along a low-frequency path to prompt the ID transmitter (ID), is the interrogation signal with which the carrier wave of the respond signal is amplitude-modulated.

13. Method according to one of claims 10 to 12, **characterised in that** the frequency of the interrogation signal changes during its transmission period.

14. Method according to claim 8, **characterised in that** a carrier wave, modulated with a modulation mixture consisting of one or more modulation variables, is sent as the interrogation signal by the transceiver unit, the respond signal, sent by the ID transmitter (ID), being modulated with said modulation mixture after a demodulation of the interrogation signal by said ID transmitter.

15. Method according to claim 14, **characterised in that** a frequency mixture is used as the modulation mixture, which is filtered upon receipt by the transceiver unit in respect of its original frequency components, and **in that** the step of comparing the phase of the originally sent interrogation signal with the received respond signal is accomplished in respect of the individual frequency components forming the modulation mixture.

16. Method according to claim 1, **characterised in that** a modulated carrier wave is sent as the interrogation signal by the transceiver unit and, upon receipt of the equally modulated respond signal sent by the ID transmitter, the function value of the modulation function of the modulation variables of the received respond signal is compared, by the transceiver unit at a time (t₀), with the function value of the modulation function of the interrogation signal originally sent by the transceiver unit, and the comparison result is evaluated to determine the distance between the base station and the ID transmitter.

17. Method according to claim 16, **characterised in that**, to compare the two function values, the step of forming a difference between the sums of the isochronous function values of the modulation variables is accomplished.

18. Method according to claim 16 or 17, **characterised in that**, in dependence on the determined comparison value (Δf) in a subsequent step, a determination is effected to ascertain whether the ID transmitter is situated within a predetermined receiving range relative to the base station.

19. Method according to one of claims 16 to 18, **characterised in that** the frequency of the carrier wave (433 MHz), provided for the interrogation signal, differs from that of the respond signal (868 MHz).

20. Method according to one of claims 16 to 19, **characterised in that** the carrier wave, provided as the interrogation signal, is sent linearly in a frequency-modulated manner.

21. Method according to claim 20, **characterised in that** the interrogation signal, demodulated at the ID transmitter end, is used to modulate a modulated carrier wave sent as the respond signal by the ID transmitter.

22. Method according to one of claims 16 to 19, **characterised in that** the carrier wave, provided as the interrogation signal, is sent in an amplitude-modulated manner.

23. Keyless access authorisation checking device, having a base station (2, 20, B), which includes a transceiver unit (4, 22, 48, 59, 74) and a control and evaluation member (7, 30, 51, 68, 75), and a mobile identification transmitter (ID transmitter) (3, 21, ID), which includes a transceiver unit (12, 36, 55), for checking the access authorisation of a person carrying the ID transmitter (3, 21, ID), by means of which base station (2, 20, B) a distance determination can be accomplished to determine the distance between the base station (2, 20, B) and the ID transmitter (3, 21, ID), **characterised in that** the base station (2, 20, B) has associated therewith means for accomplishing a relative determination of a signal characteristic, which correlates with the transit time of a signal, which means includes a detector for detecting the signal characteristic, a member for picking-up a reference code signal, which is monitored at the base station end, and a comparison member for comparing the signal characteristic of the reference code signal at the time of receipt of a respond signal sent by the ID transmitter (3, 21, ID).

24. Method according to one of claims 1 to 22, **characterised in that** the method is used within the scope of a keyless access authorisation check for an automotive vehicle.

## Revendications

1. Procédé pour effectuer un contrôle d'autorisation d'accès sans clé au moyen d'une communication sans fil entre une unité émettrice-réceptrice (4, 22, 48, 59, 74) affectée à une station de base (2, 20, B) et un identificateur mobile (3, 21, ID) pour contrôler l'autorisation d'une personne portant sur elle l'identificateur (3, 21, ID), comprenant :
- Emission d'un signal code par l'unité émettrice-réceptrice de la station de base (2, 20, B),
- Réception de ce signal code par l'identificateur (3, 21, ID)
- Réalisation d'une action détectable par l'unité émettrice-réceptrice (4, 22, 48, 59, 74) et exécutée par l'identificateur (3, 21, ID), en guise de signal de réponse de l'identificateur (3, 21, ID) à la réception du signal code et
- Détection de l'action de l'identificateur (3, 21, ID) et détermination de l'intervalle entre la station de base (2, 20, B) et l'identificateur (3, 21, ID)
**caractérisé en ce que** la détermination de l'intervalle se fait sur la base d'une détermination relative au cours de laquelle on évaluera les différences d'une caractéristique de signal en corrélation avec le temps de transit du signal et se modifiant au fur et à mesure du trajet entre un signal code de référence surveillé par la station de base et le signal de réponse réceptionné par l'unité émettrice-réceptrice (4, 22, 48, 59, 74).

2. Procédé selon la revendication 1 caractérisé en que, pour déterminer l'intervalle, un comptage des oscillations de la porteuse émise par la station de base (2, 20) démarre en même temps que l'émission d'un signal code par l'unité émettrice-réceptrice (4, 22) et est arrêté dès que l'action a été exécutée par l'identificateur (3, 21) après réception d'un signal code et qu'ensuite l'intervalle entre la station de base (2, 20) et l'identificateur (3, 21) soit déterminé en partant du résultat du comptage des oscillations.

3. Procédé selon la revendication 2 **caractérisé par le fait qu'**au cours d'une première étape de détermination de l'intervalle, l'unité émettrice-réceptrice (4) émet un ordre EMETTEUR IDENTIFICATEUR MARCHE, à la suite duquel l'identificateur (3) commence à émettre sur une première fréquence f₁ et qu'au cours d'une seconde étape, après un laps de temps préalablement déterminé, l'unité émettrice-réceptrice (4) émet un signal code sur une seconde fréquence f₂ contenant l'ordre EMETTEUR IDENTIFICATEUR ARRET, sachant qu'au moment de l'émission de l'ordre commence le comptage des oscillations de la porteuse réceptionnée par l'unité émettrice-réceptrice (4), lequel sera arrêté lorsque l'unité émettrice-réceptrice (4) de la station de base (2) ne détecte plus aucun signal d'émission de l'identificateur (3).

4. Procédé selon la revendication 2 **caractérisé en ce que** l'unité émettrice-réceptrice de la station de base émet un signal code réceptionné par l'identificateur et renvoyé, sachant que le comptage des oscillations de la porteuse s'interrompt lorsque le signal code a été totalement réceptionné en retour par l'unité émettrice-réceptrice.

5. Procédé selon la revendication 2 **caractérisé en ce que** l'unité émettrice-réceptrice (22) de la station de base (20) émet un signal code et qu'en même temps démarre un premier comptage des oscillations de la porteuse émise, lequel signal code est réceptionné et renvoyé par l'identificateur (21), sachant qu'à la réception du signal code renvoyé par l'identificateur (21) commence un second comptage des oscillations et que le second comptage des oscillations s'arrête lorsque le premier comptage des oscillations a atteint un nombre correspondant au double des oscillations du signal code.

6. Procédé selon la revendication 4 ou 5 **caractérisé en ce que** le signal code émis est un nombre déterminé d'oscillations d'une porteuse.

7. Procédé selon une ou plusieurs des revendications 2 à 6 **caractérisé par le fait qu'**au moment du comptage des oscillations de la porteuse, seule 1 oscillation sur 2^{x} est comptée.

8. Procédé selon la revendication 1 **caractérisé en ce que** l'identificateur (ID) émet en guise de signal de réponse, une porteuse modulée dont la grandeur de modulation prévue (fréquence et/ou amplitude) est transmise avec le signal d'interrogation émis par l'unité émettrice-réceptrice à l'identificateur (ID) et qu'après réception par l'unité émettrice-réceptrice du signal de réponse émis par l'identificateur (ID), la relation des phases du signal de réponse réceptionné et démodulé est comparée à celle du signal d'interrogation émis à l'origine.

9. Procédé selon la revendication 8 **caractérisé en ce que** la porteuse du signal de réponse fait l'objet d'une modulation d'amplitude.

10. Procédé selon la revendication 8 ou 9 **caractérisé en ce que** le signal d'interrogation est émis par l'unité émettrice-réceptrice sur la fréquence utilisée pour moduler le signal de réponse émis par l'identificateur (ID) sur une autre fréquence.

11. Procédé selon l'une des revendications 8 à 10 **caractérisé en ce que** le signal d'interrogation comprend un codage.

12. Procédé selon la revendication 10 ou 11 **caractérisé en ce que** le signal de réveil émis sur une voie à basse fréquence pour activer l'identificateur (ID) est le signal d'interrogation au moyen duquel la porteuse du signal de réponse fasse l'objet d'une modulation d'amplitude.

13. Procédé selon l'une des revendications 10 à 12 **caractérisé en ce que** la fréquence du signal d'interrogation se modifie pendant sa durée d'émission.

14. Procédé selon la revendication 8 **caractérisé en ce que** l'unité émettrice-réceptrice émet en guise de signal d'interrogation une porteuse modulée par un spectre de modulations constitué d'une ou de plusieurs variables de modulation, spectre de modulations à l'aide duquel, après démodulation du signal d'interrogation par l'identificateur (ID), le signal de réponse émis par ce dernier sera modulé.

15. Procédé selon la revendication 14 **caractérisé en ce qu'**on utilise en guise de spectre de modulations un spectre de fréquences lequel fera, après réception par l'unité émettrice-réceptrice, l'objet d'un filtrage relatif aux proportions de fréquences d'origine et que l'étape de comparaison des phases entre le signal d'interrogation émis à l'origine et le signal de réponse réceptionné, concernant chaque proportion de fréquence constituant le spectre de modulations, est exécutée.

16. Procédé selon la revendication 1 **caractérisé en ce que** l'unité émettrice-réceptrice émet en guise de signal d'interrogation une porteuse modulée et qu'après réception par l'unité émettrice-réceptrice du signal de réponse émis par l'identificateur, modulé de la même manière, la valeur de fonction de la fonction de modulation des variables de modulation du signal de réponse réceptionné fait l'objet, au moment (t₀), d'une comparaison avec la valeur de fonction des fonctions de modulation du signal d'interrogation émis à l'origine par l'unité émettrice-réceptrice et que le résultat de la comparaison est évalué afin de déterminer l'intervalle entre la station de base et l'identificateur.

17. Procédé selon la revendication 16 **caractérisé en ce que** pour comparer les deux valeurs de fonction, une étape au cours de laquelle la différence des montants des valeurs de fonction isochroniques des variables de modulation est effectuée.

18. Procédé selon la revendication 16 ou 17 **caractérisé en ce que**, selon la valeur comparative déterminée (Δf), il est défini au cours de l'étape suivante si l'identificateur se trouve dans le champ de réception déterminé de la station de base.

19. Procédé selon l'une des revendications 16 à 18 **caractérisé en ce que** la fréquence de la porteuse prévue pour le signal d'interrogation (433 MHz) se différencie de celle du signal de réponse (868 MHz).

20. Procédé selon l'une des revendications 16 à 19 **caractérisé en ce que** la porteuse prévue en tant que signal d'interrogation est émise de manière linéaire à modulation de fréquence.

21. Procédé selon la revendication 20 **caractérisé en ce que** le signal d'interrogation démodulé par l'identificateur est utilisé pour moduler une porteuse modulée et émit par l'identificateur en tant que signal de réponse.

22. Procédé selon l'une des revendications 16 à 19 **caractérisé en ce que** la porteuse prévue en tant que signal d'interrogation est émise avec une modulation d'amplitude.

23. Unité de contrôle d'autorisation d'accès sans clé avec une station de base (2, 20, B) comprenant une unité émettrice-réceptrice (4, 22, 48, 59, 74) ainsi qu'un élément de commande et d'évaluation (7, 30, 51, 68, 75) et un identificateur mobile (3, 21, ID) présentant une unité émettrice-réceptrice (12, 36, 55) pour contrôler l'autorisation d'accès d'une personne portant sur elle l'identificateur (3, 21, ID), station de base (2, 20, B) à l'aide de laquelle il est possible de déterminer l'intervalle entre la station de base (2, 20, B) et l'identificateur (3, 21, ID) **caractérisée en ce que** la station de base (2, 20, B) est équipée de moyens pour une détermination relative d'une caractéristique de signal en corrélation avec le temps de transit du signal, lesquels moyens comprennent un dispositif de détection pour détecter la caractéristique du signal, un élément pour saisir un signal code de référence surveillé par la station de base, ainsi qu'un élément comparateur destiné à comparer la caractéristique du signal code de référence au moment de la réception d'un signal de réponse émis par l'identificateur (3, 21, ID).

24. Procédé selon l'une des revendications 1 à 22 **caractérisé en ce que** le procédé concernant le contrôle d'autorisation d'accès sans clé est mis en oeuvre dans un véhicule à moteur.
